# EUROPEAN PATENT APPLICATION

(11) **EP 2 891 970 A1**
(43) Date of publication of application: **08.07.2015**
(21) Application number: 15150078.2
(22) Date of filing: 05.01.2015
(51) Int. Cl.: G06F 3/0488, G06F 3/0483, G06F 3/0481

(54) **Method for providing glance information, machinereadable storage medium, and electronic device**

(30) Priority: 03.01.2014 KR 20140000668
(71) Applicant: Samsung Electronics Co., Ltd, Gyeonggi-do 443-742 (KR)
(72) Inventor: Kim, Hye-Won, 443-742 Gyeonggi-do (KR); Kwon, Zi-On, 443-742 Gyeonggi-do (KR); Kim, Ho, 443-742 Gyeonggi-do (KR); Seo, Jung-Eui, 443-742 Gyeonggi-do (KR); Yang, Chang-Mo, 443-742 Gyeonggi-do (KR); Jeon, Ha-Young, 443-742 Gyeonggi-do (KR); Chung, Jin-Kyo, 443-742 Gyeonggi-do (KR); Choi, Bong-Hak, 443-742 Gyeonggi-do (KR); Choi, Joon-Hyuk, 443-742 Gyeonggi-do (KR); Joo, Jong-Sung, 443-742 Gyeonggi-do (KR)
(74) Representative: Nederlandsch Octrooibureau

(57) **Abstract**

A method and apparatus for modifying a screen displayed by a mobile terminal are provided. The method includes displaying an application on the screen of the mobile terminal; displaying, simultaneously with the displayed application, a card in a predefined area of the screen, the card comprising information corresponding to the application; detecting an input on the screen of the mobile terminal; modifying a display of at least one of the card and the predefined area based on a type of the input and a position of the input on the screen, wherein, when the detected input is an input selecting one of a plurality of objects displayed within the card each corresponding to a different operation, modifying the display comprises performing the operation corresponding to the selected object.

## Description

### Field of the Invention

The present invention relates generally to a method for providing application-related information.

### Background to the Invention

Recently, up to several hundreds of applications have been stored in electronic devices such as smart phones and tablet Personal Computers (PCs). Shortcut keys for executing the respective applications are displayed in the form of icons on touchscreens of mobile devices, and a user may execute a desired application on the electronic device by touching a corresponding icon displayed on a display unit.

The number of icons that can be displayed on a small-size screen provided in an electronic device is limited. Moreover, it may be inconvenient for a user to find a desired function (or application) from among various functions and may spend a significant amount of time in finding a desired the function.

### Summary of the Invention

An aspect of the present invention is to address at least the above-described problems and/or disadvantages and to provide at least the advantages described below. Accordingly, an aspect of the present invention is to classify and organize information to be displayed on a screen of an electronic device due to a limitation in a space for display on the screen.

Another aspect of the present invention is to provide a user-friendly information providing method that allows a user to know screen-related information or icon that is not visible in an electronic device and considers a real environment of the electronic device.

According to an aspect of the present invention, a method for modifying a screen displayed by a mobile terminal is provided. The method includes displaying an application on the screen of the mobile terminal; displaying, simultaneously with the displayed application, a card in a predefined area of the screen, the card comprising information corresponding to the application; detecting an input on the screen of the mobile terminal; modifying a display of at least one of the card and the predefined area based on a type of the input and a position of the input on the screen, wherein, when the detected input is an input selecting one of a plurality of objects displayed within the card each corresponding to a different operation, modifying the display comprises performing the operation corresponding to the selected object.

According to another aspect of the present invention, an apparatus for modifying a display of a mobile terminal is provided. The apparatus includes a memory; and at least one processor coupled to the memory and configured to display an application on the screen of the mobile terminal; display, in addition to the displayed application, a card in a predefined area of the screen, the card comprising information corresponding to the application; detect an input on the screen of the mobile terminal; and modify a display of at least one of the card and the predefined area based on a type of the input and a position of the input on the screen, wherein, when the detected input is an input selecting one of a plurality of objects displayed within the card each corresponding to a different operation, modifying the display includes performing the operation corresponding to the selected object.

According to another aspect of the present invention, a computer-readable recording medium having recorded thereon a program for modifying a display of a mobile terminal is provided. The program, when executed, implements a method that includes displaying an application on the screen of the mobile terminal; displaying, simultaneously with the displayed application, a card in a predefined area of the screen, the card comprising information corresponding to the application; detecting an input on the screen of the mobile terminal; and modifying a display of at least one of the card and the predefined area based on a type of the input and a position of the input on the screen, wherein, when the detected input is an input selecting one of a plurality of objects displayed within the card each corresponding to a different operation, modifying the display comprises performing the operation corresponding to the selected object.

### Brief Description of the Drawings

The above and other aspects, features and advantages of embodiments of the present invention will be more apparent from the following detailed description taken in conjunction with the accompanying drawings, in which:
FIG. 1 is a block diagram illustrating an electronic device according to an embodiment of the present invention;
FIG. 2 is a flowchart illustrating a method for providing glance information according to an embodiment of the present invention;
FIGs. 3A and 3B are diagrams illustrating examples of an electronic device according to an embodiment of the present invention;
FIGs. 4A and 4B are diagrams illustrating a glance panel according to an embodiment of the present invention;
FIGs. 5A, 5B, 6A, and 6B are diagrams illustrating various initial aspects of a glance panel according to an embodiment of the present invention;
FIG. 7 is a flowchart illustrating a method for providing glance information according to another embodiment of the present invention;
FIGs. 8A to 10B are diagrams illustrating examples of screen displays according to hiding of a glance panel according to various embodiments of the present invention;
FIGs. 11A to 12B are diagrams illustrating examples of screen displays according to grouping of glance cards according to an embodiment of the present invention;
FIGs. 13A to 13D are diagrams illustrating various examples of glance cards according to an embodiment of the present invention;
FIGs. 14A and 14B are diagrams illustrating examples of screen displays according to hiding of glance cards according to an embodiment of the present invention;
FIG. 15 is a flowchart illustrating a method for providing glance information according to another embodiment of the present invention;
FIGs. 16A to 17B are diagrams illustrating examples of screen displays according to a method for providing glance information according to another embodiment of the present invention;
FIGs. 18A to 20B are diagrams illustrating examples of screen displays according to methods for editing glance information according to various embodiments of the present invention;
FIGs. 21A and 21B are diagrams illustrating an environment setting method for a glance function according to an embodiment of the present invention;
FIGs. 22A to 23B are diagrams illustrating an environment setting method for a glance function according to another embodiment of the present invention;
FIGs. 24A to 25B are diagrams illustrating a method for providing glance information according to another embodiment of the present invention;
FIGs. 26A to 26D are diagrams illustrating examples of glance cards corresponding to a contact/phone application according to an embodiment of the present invention;
FIGs. 27A to 28B are diagrams illustrating examples of glance cards corresponding to an e-mail application according to an embodiment of the present invention;
FIGs. 29A to 30B are diagrams illustrating examples of glance cards corresponding to a message application according to an embodiment of the present invention;
FIGs. 31A to 31C are diagrams illustrating examples of glance cards corresponding to a gallery application according to an embodiment of the present invention;
FIGs. 32A to 32C are diagrams illustrating examples of glance cards corresponding to an album application according to an embodiment of the present invention;
FIGs. 33A and 33B are diagrams illustrating examples of glance cards corresponding to a download/my file application according to an embodiment of the present invention;
FIGs. 34A to 34C are diagrams illustrating examples of glance cards corresponding to a scrapbook application according to an embodiment of the present invention;
FIGs. 35A to 35D are diagrams illustrating examples of glance cards corresponding to a help application according to an embodiment of the present invention;
FIGs. 36A to 37B are diagrams illustrating examples of glance cards corresponding to environment setting according to an embodiment of the present invention;
FIGs. 38A to 39C are diagrams illustrating examples of glance cards corresponding to a schedule application corresponding to a help application according to an embodiment of the present invention;
FIGs. 40A and 40B are diagrams illustrating examples of screen displays according to a method for providing a glance panel in a multi-window environment according to an embodiment of the present invention; and
FIG. 41 is a diagram illustrating an example of a screen display according to a method for providing a glance panel in a multi-tasking environment according to an embodiment of the present invention.

### Description of Embodiments of the Invention

Embodiments of the present invention allow for various changes and numerous embodiments, particular embodiments will be illustrated in the drawings and described in detail. However, embodiments of the present invention are not limited to the specific embodiments and should be construed as including all the changes, equivalents, and substitutions included in the scope of the present invention.

Although ordinal numbers such as "first," "second," etc., may be used herein to describe various components of embodiments of the present invention, those components are not limited by these terms. These terms are merely used for distinguishing components from each other. For example, a first component may be referred to as a second component and likewise, a second component may also be referred to as a first component, without departing from embodiments of the present invention. The term "and/or" used herein includes any and all combinations of one or more of the associated listed items.

The terminology used herein is for the purpose of describing certain embodiments, and is not intended to be limiting of all embodiments. As used herein, the singular forms are intended to include the plural forms as well, unless the context clearly indicates otherwise. The terms "comprises" and/or "has" when used in this specification, specify the presence of a stated feature, number, step, operation, component, element, or a combination thereof but do not preclude the presence or addition of one or more other features, numbers, steps, operations, components, elements, or combinations thereof.

The terms used herein, including technical and scientific terms, have the same meanings as terms that are generally understood by those skilled in the art, unless otherwise indicated the terms are differently defined. It should be understood that terms defined in a generally-used dictionary have meanings coinciding with those of terms in the related technology unless otherwise indicated. As long as the terms are not defined obviously, they are not ideally or excessively analyzed as formal meanings.

According an embodiment of the present invention, an electronic device may be any of various electronic devices, such as a terminal, a portable terminal, a mobile terminal, a communication terminal, a portable communication terminal, a portable mobile terminal, and a display device.

For example, the electronic device may be a smart phone, a cellular phone, a navigation device, a game console, a Television (TV), a laptop computer, a tablet Personal Computer (PC), a Personal Media Player (PMP), a Personal Digital Assistant (PDA), etc. The electronic device may be implemented as a pocket-size portable communication terminal having a wireless communication function. The electronic device may be a flexible device or a flexible display device.

The electronic device may communicate or interwork with an external electronic device such as a server. For example, the electronic device may transmit an image captured by a camera and/or location information detected by a sensor unit to a server through a network. The network may be, but not limited to, a mobile or cellular communication network, a Local Area Network (LAN), a Wireless Local Area Network (WLAN), a Wide Area Network (WAN), the Internet, or a Small Area Network (SAN).

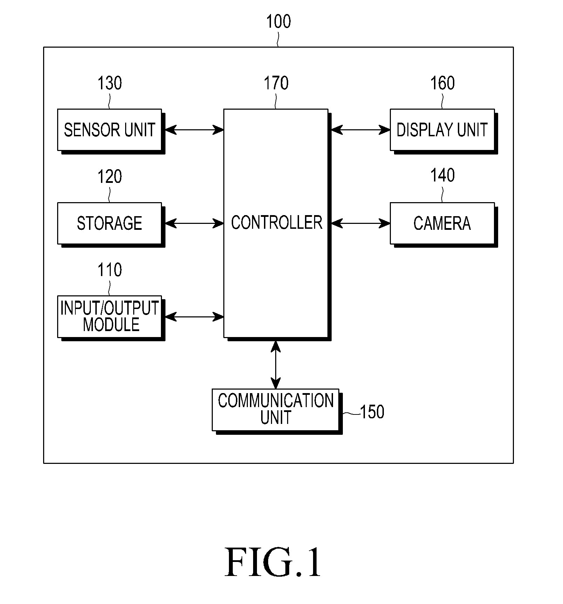

FIG. 1 is a block diagram illustrating an electronic device 100 according to an embodiment of the present invention. FIG. 1 shows a representative structure of the electronic device 100, and some components may be omitted or changed in accordance with embodiments of the present invention.

Referring to FIG. 1, the electronic device 100 includes an input/output module 110, a storage 120, a sensor unit 130, a camera 140, a communication unit 150, a display unit 160, and a controller 170.

The input/output module 110 receives user input from a user and provides information to the user, and may include (not shown), for example, a plurality of buttons, a microphone, a speaker, a vibration element, a connector, a keypad, a mouse, a trackball, a joystick, cursor direction keys, and/or a cursor control.

The buttons may be formed on a front surface, a side surface, and/or a rear surface of the electronic device 100, and may include (not shown), for example, a power/lock button, a volume button, a menu button, a home button, a back button, and/or a search button.

The microphone receives input voice or sound to generate an electrical signal under the control of the controller 170.

The speaker outputs sound corresponding to various signals (e.g., a radio signal, a broadcast signal, a digital audio file, a digital video file, and a photo) under the control of the controller 170. The speaker outputs sound corresponding to functions performed by the electronic device 100. One or more speakers may be installed at various positions of the electronic device 100.

The vibration element converts an electrical signal to mechanical vibrations under the control of the controller 170. For instance, upon receiving a voice call from another electronic device (not shown) while the electrical device 100 is in a vibration mode, the electronic device 100 operates the vibration element. One or more vibration elements may be mounted inside the electronic device 100. The vibration element may operate in response to a user's touch or a continuous movement of the touch on the display unit 160.

The connector is an interface for connecting the electronic device 100 to an external device, such as a server, an external electronic device, or a power source. Data stored in the storage 120 of the electronic device 100 may be transmitted to an external device, or data may be received from an external device by a cable connected to the connector under the control of the controller 170. Power may be received from the power source (or a battery may be charged) by a cable connected to the connector.

The keypad receives key input from the user, for controlling the electronic device 100. The keypad may be a physical keypad formed in the electronic device 100 or a virtual keypad displayed on the display unit 160.

The storage 120 stores data for driving one or more applications such as a voice recognition application, a schedule management application, a document writing application, a music application, an Internet application, a map application, a camera application, an e-mail application, an image editing application, a search application, a file search application, a video application, a game application, a Social Network Service (SNS) application, a phone application, a message application, and/or the like. The storage 120 may store images for providing Graphic User Interfaces (GUIs) related to one or more applications, data or a database such as user information, or documents, background images (a menu screen, a standby screen, etc.) or operation programs needed to operate the electronic device 100, and/or images captured by the camera. The storage 120 is a machine-readable medium (e.g., a computer-readable medium). Herein, the term 'machine-readable medium' refers to a medium that provides data to a machine so that the machine can perform a specific function. The machine-readable medium may be a storage medium. The storage 120 may include a non-volatile medium and/or a volatile medium. All such media are tangible media that allow commands from these media to be detected by a physical device through which a machine reads the commands.

The machine-readable media may include, for example, at least one of (i.e., any one or a partial or whole combination of) a floppy disk, a flexible disk, a hard disk, a magnetic tape, a Compact Disc Read-Only Memory (CD-ROM), an optical disk, a punch card, a paper tape, a Random Access Memory (RAM), a Programmable Read-Only Memory (PROM), an Erasable PROM (EPROM), and a flash-EPROM.

The sensor unit 130 includes one or more sensors for detecting a state (e.g., the position, bearing, movement, or the like) and/or environment information (e.g., a luminous intensity, a temperature, or the like) of the electronic device 100. For example, the sensor unit 130 may include a proximity sensor for detecting whether a user is in the vicinity of the electronic device 100 and a motion/bearing sensor for detecting motion (for example, rotation, acceleration, deceleration, vibration, and/or the like) of the electronic device 100. The motion/bearing sensor may include an acceleration sensor (or a gravity sensor) for measuring a tilt and detecting a linear speed change, a gyro sensor for detecting an angular velocity, a shock sensor, a Global Positioning System (GPS) sensor, a compass sensor (or a geomagnetic sensor) for detecting a bearing, or an inertial sensor for detecting an inertial force of movement to provide various information about a moving object that is a measurement target, such as acceleration, velocity, direction, distance, and so forth. The sensor unit 130 detects a state of the electronic device 100, generates a signal corresponding to the detected state, and transmits the signal to the controller 170. For example, the GPS sensor may receive signals from a plurality of GPS satellites (not shown) in earth orbit and calculate the GPS position of the electronic device 100 based on the Time of Arrival (ToA) of the received signals from the GPS satellites to the electronic device. The compass sensor calculates the posture or bearing of the electronic device.

The camera 140 includes a lens system for forming an image of an object by converging external incident light, an image sensor for converting an optical image into an electric image signal or data and outputting the electric image signal or the data, and a driving unit for driving the image sensor under control of the controller 170. The camera 140 may also include a flash.

The communication unit 150 is provided for direct connection with a server or an external electronic device or for connection therewith through a network. The communication unit 150 may be a wired or wireless communication unit. The communication unit 150 transmits data from the controller 170, the storage 120, or the camera 140 in a wired or wireless manner or receives data from an external communication line in a wired or wireless manner to transfer the data to the controller 170 or stores the data in the storage 120.

The communication unit 150 may include (not shown), for example, a mobile communication module, a Wireless Local Access Network (WLAN) module, a short-range communication module, an Integrated Services Digital Network (ISDN) card, a modem, a LAN module, an infrared module, a Bluetooth® module, a Zigbee module, or a wireless module.

The mobile communication module connects the electronic device 100 with an external device through mobile communication by using one or more antennas under control of the controller 170. The mobile communication module transmits and receives a Radio Frequency (RF) signal to and from an external device having a phone number or a network address, such as a portable phone, a smart phone, a tablet PC, or other devices, to conduct a voice call or a video call, or to exchange data including a Short Message Service (SMS) message, a MultiMedia Service (MMS) message, or the like.

The WLAN module is connected to the Internet in a place where a wireless Access Point (AP) (not shown) is installed, or conducts wireless communication between the electronic device 100 and an external device, under the control of the controller 170. The WLAN module supports the WLAN standard (IEEE802.11x) of the Institute of Electrical and Electronics Engineers (IEEE). The short-range communication module performs wireless short-range communication between the electronic device 100 and an image forming apparatus (not shown) under control of the controller 170. The short-range communication may include Wireless Fidelity (WiFi), Bluetooth®, or Infrared Data Association (IrDA).

The display unit 160 displays images or data input from the controller 170 on a screen. The display unit 160 may include, for example, a Liquid Crystal Display (LCD), a touch screen, or the like. The display unit 160 displays an image, generates a key contact interrupt when a user input means like a finger or a stylus pen touches the surface of the display 160, and outputs user input information specifying input coordinates and an input state to the controller 170, under the controller 170.

The display unit 160 provides GUIs corresponding to various services or functions (e.g., a call, data transmission, broadcasting, and photo/video capturing) to the user. The display unit 160 outputs user input information corresponding to one or more touch inputs to the GUI to the controller 170. The display 160 receives one or more touch inputs through a user's body part (for example, a finger) or a touch input means (for example, a stylus pen). The display unit 160 may also receive a continuous movement of the one or more touch inputs. The display unit 160 may output user input information corresponding to the input continuous movement of the touch to the controller 170.

Herein, a touch is not limited to contact between the display 160 and a user's body part or a touch input means, but may include a non-contact touch (e.g., a case where the display 160 is apart from the user's body part or the touch input means by a distance between 0 and 5 cm). Such a distance may greater than the example range above according to a hovering sensing capability of the display unit 160. The display 160 may be a resistive, capacitive, infrared, acoustic wave, ElectroMagnetic (EM), or ElectroMagnetic Resonance (EMR) touch screen, for example.

A user's touch/hovering gesture using a finger or a pen may include at least one of a touch, a tap, double taps, a flick, a drag, drag & drop, a swipe, multi-swipes, pinches, touch & hold, a shake, and rotate, depending on input methods. The touch refers to the gesture of placing an input unit on the display unit 160. The tap refers to the gesture of short and slightly tapping the display unit 160 by means of the input unit. The double taps refer to the gesture of quickly tapping the display unit 160 twice. The flick refers to the gesture of placing the input unit on the display unit 160, quickly moving the input unit on the display unit 160, and then removing the input unit from the display unit 160, such as when a user performs an input for scrolling. The drag refers to the gesture of moving or scrolling an object displayed on the display unit 160. The drag & drop refers to the gesture of moving an object while touching the display unit 160 and then stopping moving to remove the input unit from the display unit 160. The swipe refers to the gesture of moving a predetermined distance while touching the display unit 160 with the input unit. The multi-swipes refer to the gesture of moving a predetermined distance while touching the display unit 160 with at least two input units (or fingers). The pinches refer to the gesture of moving at least two input units (or fingers) in different directions while touching the display unit 160 with the at least two input units (or fingers). The touch & hold refers to the gesture of inputting a touch or hovering to the display unit 160 until an object such as a balloon help is displayed. The shake refers to the gesture of performing an operation by shaking the electronic device 100. The rotate refers to the gesture of changing the direction of the display unit 160 from a portrait mode to a landscape mode or from the landscape mode to the portrait mode.

The controller 170 executes an application corresponding to user input information, and the application performs a program operation corresponding to the user input information. The user input may include an input made through the input/output module 110, the display unit 160, or the sensor unit 130 or an input made through the camera 140.The controller 170 may include a bus for information communication and a processor connected with the bus for information processing. The controller 170 may include a Central Processing Unit (CPU), an Application Processor (AP) and/or a Communicaiton Processor (CP).

The controller 170 may further include a Random Access Memory (RAM) connected with the bus to temporarily store information needed by the processor and a Read Only Memory (ROM) connected with the bus to store static information needed by the processor.

The controller 170 controls the overall operation of the electronic device 100 and performs a method for providing glance information according to an embodiment of the present invention.

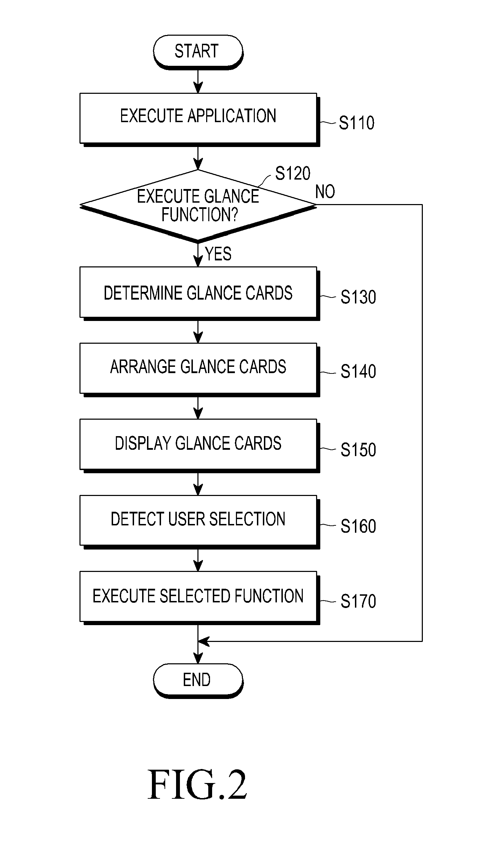

FIG. 2 is a flowchart illustrating a method for providing glance information according to an embodiment of the present invention.

Step S110 is an application execution process.

In step S110, the controller 170 executes an application based on a user's selection or an auto setting, and displays a screen of the executed application (i.e., an application screen) on the display unit 160. An automatically executed application may be, for example, a home application, a default application, an application set to be automatically executed in environment settings, or an application automatically executed upon an occurrence of an event such as message reception, call reception, or an alarm event.

In order to execute an application based on a user input, the controller 170 may receive the user input through the input/output unit 110, the sensor unit 130, the camera 140, the communication unit 150, or the display unit 160. The user may select a button, an icon, or a menu item through the input/output module 110 or the display unit 160, input a voice command through the microphone of the input/output module 110, perform a gesture or motion input through the camera 140, or wirelessly input an execution command of a particular application through the communication unit 150.

The application may be, for example, a phone application, a voice recognition application, a schedule management application, a document writing application, a music application, an Internet application, a map application, a camera application, an e-mail application, an image editing application, a search application, a file search application, a video application, a game application, an SNS application, a phone application, a message application, a home application, a handwriting input application, a character input application (or a keyboard/keypad application), or the like.

The application screen is a screen shown by the display unit 160 when the application is executed. The application screen may include a plurality of objects. Application screen data corresponds to data for configuring the application screen, and may represent the plurality of objects. In the following description, the application screen and the screen of the application may be used to have the same meaning and the application screen may be referred to as application view or may also mean an application window. Herein, the term 'window' refers to a rectangular frame displayed on the screen.

The object may be displayed on the application screen and may be an image or a text, such as an application window, a menu, a function item (or a menu item), a document, a widget, a photo, a moving image, an e-mail, an SMS message, an MMS message, a folder, a button, a shortcut icon, or a thumbnail image. The object may be selected, executed, deleted, canceled, stored, or changed by a user input means (e.g., a finger, a stylus pen, or the like). The object may include a button, a shortcut icon, a thumbnail image, or a folder that stores one or more objects in the electronic device 100.

The gesture or motion input may include an input where the user draws a trajectory of a preset pattern such as a circle, a triangle, a rectangle, or the like within a viewing angle of the camera 140 or within a sensing range of the sensor unit 130, for example, by a hand or a finger. The gesture may be referred to as a spatial gesture so as to be distinguished from a touch gesture. The touch gesture may be provided through a direct touch on the display unit 160 or hovering on the display unit 160.

Step S120 is a process of determining whether to execute a glance function.

In step S120, the controller 170 checks environment settings of a glance function stored in the storage 120, and the environment settings of the glance function may include on/off information of the glance function for applications, selection information regarding at least one category related to glance cards, and priority information of the glance cards.

The controller 170 determines whether the glance function is set in the executed application and whether the glance function of the executed application is set to be on. For example, if the glance function is set in the executed application and the set glance function is set to be on, the controller 170 determines to execute the glance function. Executing the glance function means displaying the glance cards on the display unit 160.

Step S 130 is a process of determining the glance cards is performed.

In step S130, the controller 170 checks glance information corresponding to the executed application and determines at least one glance card indicating the checked glance information. The controller 170 checks glance information corresponding to the executed application and determines at least one glance card indicating the checked glance information. The controller 170 determines the glance cards based on preset environment settings and/or the state or the environment information of the electronic device 100 sensed by at least one of the sensor unit 130, the communication unit 150, and the camera 140. The controller 170 detects the state (e.g., the position, the bearing, the motion, etc.) and/or the environment information (e.g., the luminous intensity, the temperature, etc.) of the electronic device 100 through the sensor unit 130. The controller 170 detects a nearby object or user of the electronic device 100 through the camera 140. The controller 170 detects a current time, a date, the possibility of performing short-range communication, or a short-range communication device connected to the electronic device 100 through the communication unit 150.

For example, if a phone application or a contact application is executed, the controller 170 may determine to use glance cards of various categories, such as favorites, a birthday, a schedule, new contacts, etc. The glance card may be stored in the storage 120 in advance or may be generated by the controller 170 at the time of execution of an application.

For example, if an e-mail application is executed, the controller 170 may determine glance cards of various categories such as a new e-mail, a recent attached file, an SNS-related mail, an attached photo, an attached document, etc.

For example, if a message application is executed, the controller 170 may determine glance cards of various categories such as a recent attached file, a parsed text, a copied text, a photo, favorites, etc.

For example, if a gallery application is executed, the controller 170 may determine glance cards of various categories such as recommendations based on a photo taken on the same date ((e.g., the same date in a previous year) as the current date, recommendation based on a photo taken on the same time or date of the past as the current time or date, recommendation based on a photo taken at the same place as the current place, and the like.

Each glance card includes at least one object that may include an image, a text, sound, a function item, and/or the like.

Step S140 is a process of arranging the glance cards.

In step S140, the controller 170 determines a display order of the glance cards. The display order of the glance cards is set by the user or determined according to environment settings of the automatically set glance function. The display order of the glance cards may be determined according to use/access frequency, generation/use/access date/time, a current state/environment (time, place, and the like) relation, a function, an index (an alphabetic order or the like) or may be determined at random.

If a plurality of glance cards are included in the same category, the controller 170 may display these glance cards to one another.

Step S150 is a process of displaying the glance cards.

In step S150, the controller 170 displays the determined glance cards on the display unit 160 according to the determined display order. Some of the determined glance cards may be simultaneously displayed on the display unit 160, and the controller 170 may scroll the determined glance cards according to a user input (a touch gesture, a hovering gesture, a camera-based gesture, a voice command, or the like) or automatic sliding settings. As the glance cards displayed according to the scroll move to the top, the bottom, the left or the right, the glance cards that were not previously visible are displayed on the display unit 160.

Step S160 is a process of detecting a user's selection with respect to the glance cards.

In step S160, the controller 170 detects user's selection of the glance card or user's selection of an executable object of the glance card.

Step S170 is a process of executing a function corresponding to user's selection.

In step S170, the controller 170 executes an application or a function corresponding to the selected glance card or executable object. Execution of the application or function includes switching from an application screen to another application screen, and further includes execution of another application and displaying of a screen of another application.

Upon execution of another application, application screens are switched.

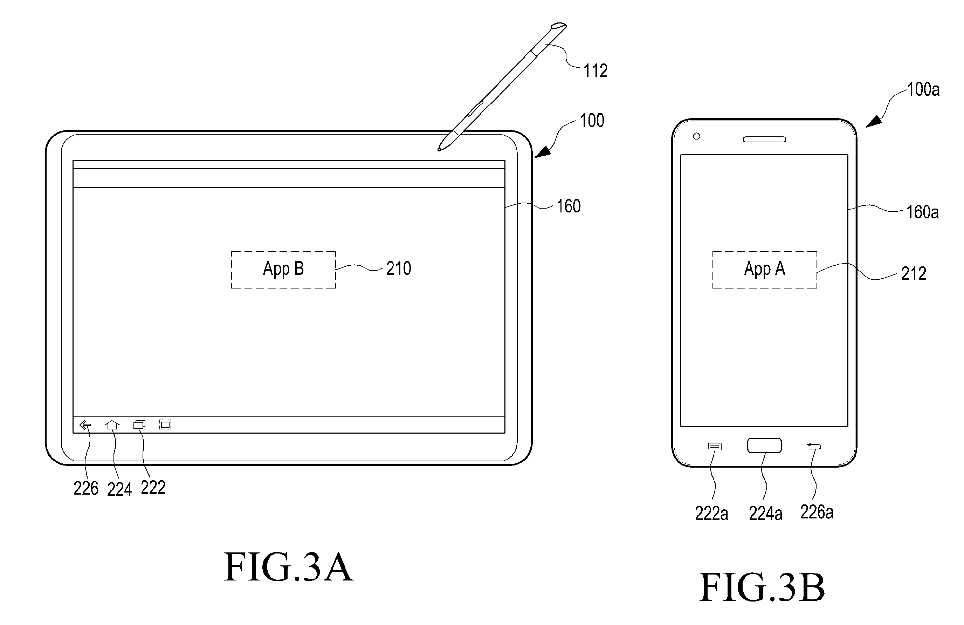

FIGs. 3A and 3B are diagrams illustrating examples of electronic devices according to embodiments of the present invention.

As stated above, the electronic device 100 may be, for example, a smartphone, a cellular phone, a navigation device, a game console, a TV, a laptop computer, a desktop computer, a tablet PC, a PMP, a PDA, or the like. FIG. 3A illustrates a tablet PC and FIG. 3B illustrates a smartphone.

Electronic devices 100 and 100a include display units 160 and 160a, respectively, and a plurality of soft keys 222, 224, and 226, and 222a, 224a, and 226a, respectively. The display units 160 and 160a display application screens 210 and 212, respectively.

FIG. 3A illustrates a pen 112 that is a part of the input/output module 110 of the electronic device 100, and the user may input a command such as selection, execution, edition, deletion, or the like of an object displayed on the display unit 160 by using the pen 112 or a finger.

The plurality of soft keys may include menu keys 222 and 222a, home keys 224 and 224a, and back keys (or cancel keys) 226 and 226a.

The menu keys 222 and 222a provide a connection menu that may be displayed on the display units 160 and 160a. The connection menu may include a widget addition menu, a background change menu, a search menu, an edit menu, an environment setting menu, and/or the like.

The home keys 224 and 224a are keys that are selected in order to request display of main home screens (e.g., a first page of a home screen) on the display units 160 and 160a. For example, when any home screen (i.e., a page other than the first page of the home screen) that is different from the main home screen, the menu screen, or an application screen other than the home screen is displayed on the display units 160 and 160a, upon selection of the home keys 224 and 224a, the main home screen may be displayed on the display units 160 and 160a. The home keys 224 and 224a may also be used to display recently used applications or a task manager on the display units 160 and 160a.

The back keys 226 and 226a may be used to display an application screen executed immediately before a currently executed application screen or to terminate the most recently used application.

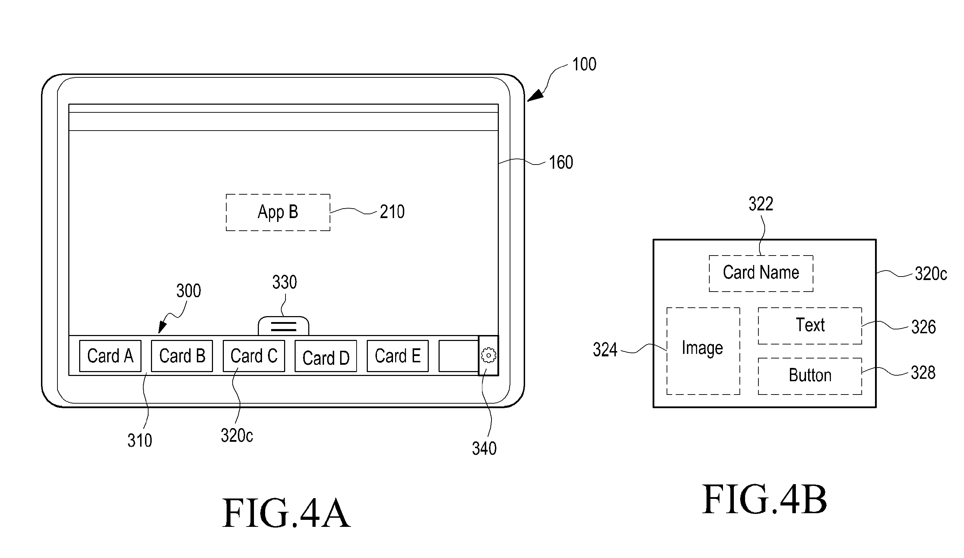

FIGs. 4A and 4B are diagrams illustrating a glance panel according to an embodiment of the present invention.

Referring to FIGs. 4A and 4B, the glance panel 300 may be displayed as overlapping a lower portion of a screen 210 of an application A (i.e., an application screen 210) or may be displayed under the application screen 210. The position of the glance panel 300 may be set by the user.

The glance panel 300 includes a glance region 310, a panel handle 330, and an environment setting item 340.

The glance region 310 includes a plurality of glance cards 320c, and the user may scroll the glance cards 320c through a touch gesture on the glance region 310.

Each glance card displays one category (or details or an item), and a plurality of glance cards may belong to one category.

For example, the same contact information may belong to a category A (for example, Favorites) and a category B (for example, New Contact), and in this case, the controller 170 may display one glance card under the category A. For example, if there are a plurality of glance cards under a category C, one or more glance cards having high priorities may be displayed from among the plurality of glance cards under category C.

In the glance region 310, among a plurality of categories, a category having a higher priority is displayed to the left of other categories having a lower priority, and in the same category, a glance card having a higher priority is displayed to the left of other glance cards in the same category having a lower priority.

Each glance card 320c may include a card name object 322 that describes a type/category of the glance card, an image object 324 and a text object 326 that describe details of the glance card, and a button 328 (or an executable item) that immediately executes a function related to details of the glance card.

If the user selects one of the plurality of displayed glance cards, the controller 170 executes a function corresponding to the selected glance card. This function may be executed by switching the screen of the application A to another screen of the application A, or by execution of a screen of an application B.

If the user selects a button of the displayed glance card, the controller 170 executes a function corresponding to the selected button and this function may be executed by switching the screen of the application A to another screen of the application A, or by execution of the screen of the application B.

If the user drags the displayed glance card upwards, the controller 170 extends the glance card to display more details of the glance card.

The glance panel 300 may be displayed at the same time as the application screen 210, may be automatically displayed a preset time (e.g., 1 second) after displaying of the application screen 210, or may be first hidden and then displayed in response to a user command. The glance panel 300 may be automatically hidden when a preset time (e.g., 5 seconds) has elapsed after displaying of the glance panel 300.

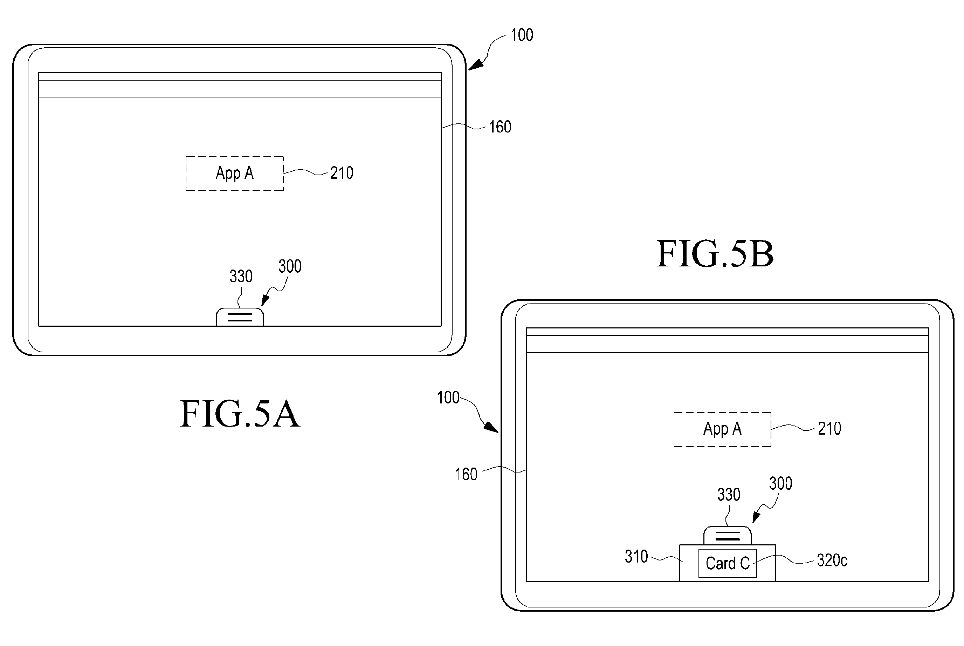

FIGs. 5A to 6B are diagrams illustrating various initial aspects of a glance panel according to an embodiment of the present invention.

Referring to FIG. 5A, the panel handle 330 is initially displayed under the application screen 210, and if the user selects the panel handle 330 or selects the panel handle 330 or drags up the panel handle 330, the glance region 310 is displayed as illustrated in FIG. 4A.

Referring to FIG. 5B, a glance panel 300 including one glance card is initially displayed under the application screen 210, and if the user selects the glance region 310 or performs a hovering gesture on the glance region 310 by using a pen, the entire glance region 310 is displayed as illustrated in FIG. 4A.

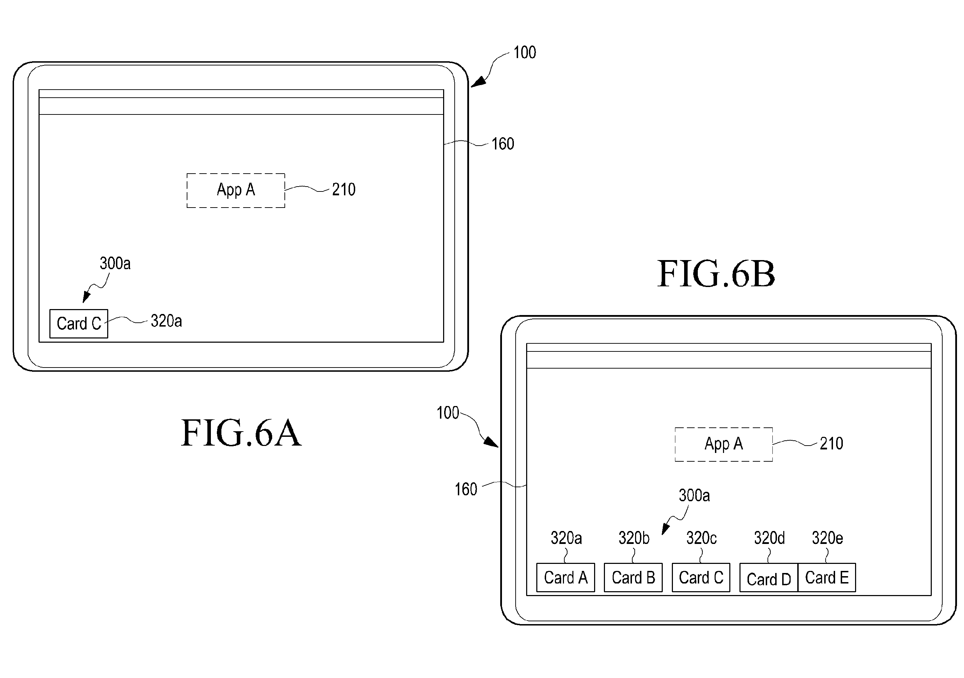

Referring to FIG. 6A, a glance panel 300a including one glance card 320a is initially displayed under the application screen 210, and if the user performs a hovering gesture on or near the glance card 320a by using a pen, a plurality of glance cards 320a, 320b, 320c, 320d, and 320e are displayed as illustrated in FIG. 6B. As shown in FIG. 6B, the glance panel 300a may include only the plurality of glance cards 320a, 320b, 320c, 320d, and 320e.

The glance cards 320d and 320e under the same category are arranged in adjacent to each other, and glance cards under different categories are arranged to be spaced apart from each other.

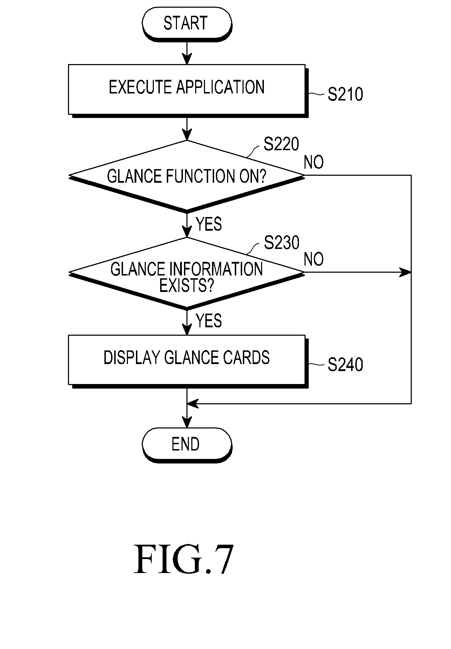

FIG. 7 is a flowchart illustrating a method for providing glance information according to another embodiment of the present invention.

Step S210 is an application execution process. In step, S210, the controller 170 executes an application according to user's selection or automatic settings, and displays a screen of the executed application (i.e., an application screen) on the display unit 160.

Step S220 is a process of determining whether a glance function is set to ON.

In step S220, the controller 170 checks environment settings of a glance function stored in the storage 120, and determines whether the glance function is set to ON or OFF in the environment settings. If the glance function is set to OFF, the controller 170 does not display the glance cards on the display unit 160.

Step S230 is a process of determining whether glance information exists.

In step S230, the controller 170 checks glance information corresponding to the executed application and determines at least one glance card indicating the checked glance information. The controller 170 does not display the glance cards on the display 160 if there is no glance information.

Step S240 is a process of displaying the glance cards.

In step S240, the controller 170 displays the determined glance cards on the display unit 160. The controller 170 determines a display order of the glance cards before displaying the glance cards, and displays the glance cards according to the determined display order.

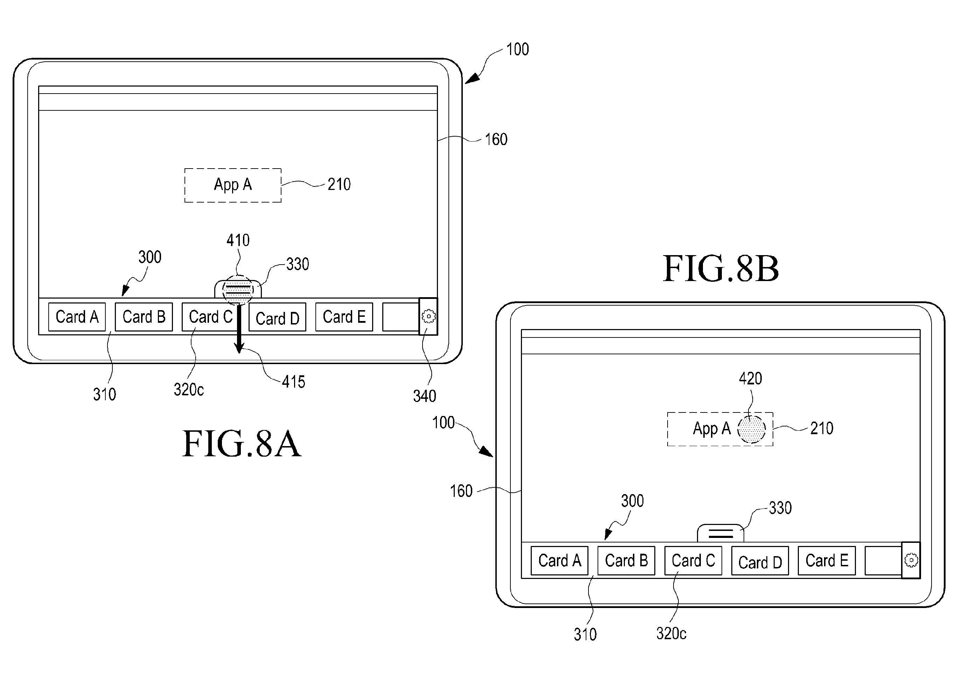

FIGs. 8A to 10B are diagrams illustrating examples of screen displays according to an operation of hiding a glance panel according to various embodiments of the present invention.

Referring to FIG. 8A, if the user selects the panel handle 330, as indicated by 410, and then performs a flick-down gesture 415, the controller 170 hides the glance region 310, as illustrated in FIG. 5A.

Referring to FIG. 8B, if the user performs a tap gesture 420 on the application screen 210, the controller 170 hides the glance region 310, as illustrated in FIG. 5A.

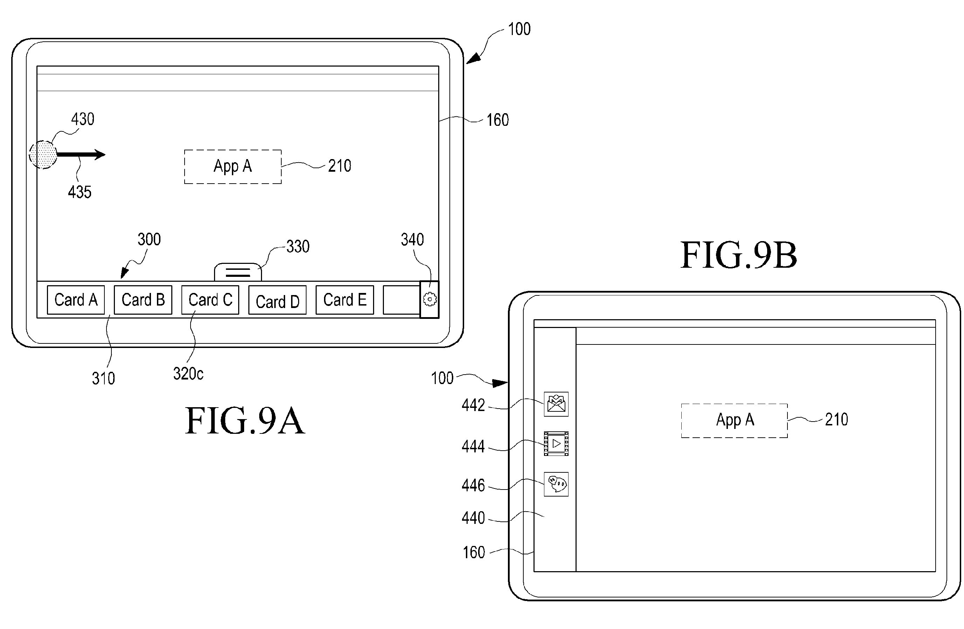

Referring to FIG. 9A, if the user touches a left edge of the display unit 160, as indicated by 430, and then performs a flick gesture 435 to the right, then the controller 170 terminates or hides the glance panel 300, as illustrated in FIG. 9B. In FIG. 9B, the controller 170 displays a hidden multi-window panel 440 according to the flick gesture 435. The multi-window panel 440 includes a plurality of icons 442, 444, and 446. In this example, the plurality of icons 442, 444, and 446 are shortcut icons for an e-mail application, a video application, and an SNS application, respectively. If the user selects one of the plurality of icons 442, 444, and 446, a corresponding application is executed.

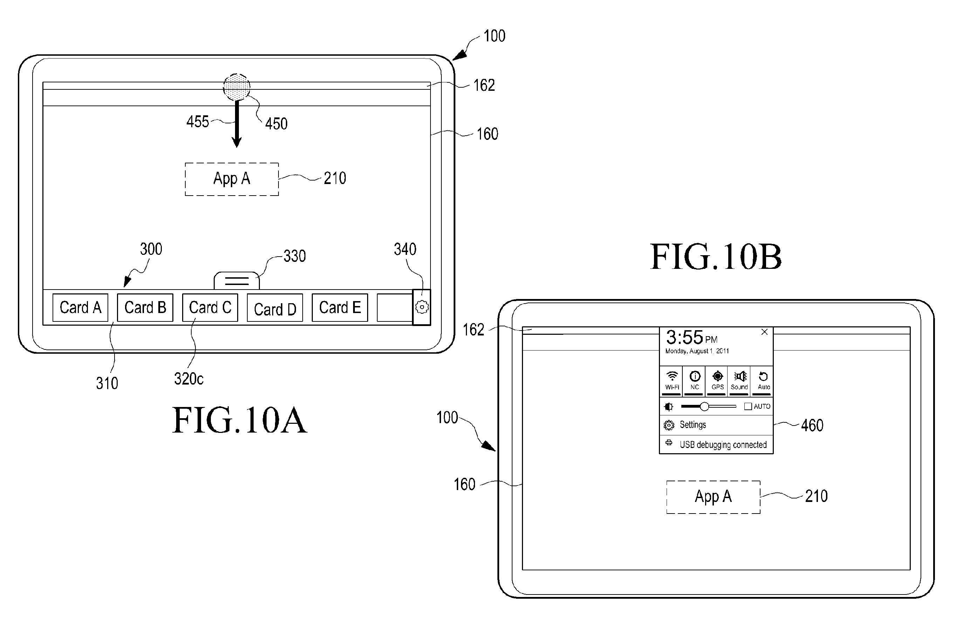

Referring to FIG. 10A, if the user touches a status bar 162 of the display unit 160 as indicated by 450 and then performs a flick-down gesture 455, then the controller 170 terminates or hides the glance panel 300, as illustrated in FIG. 10B. In FIG. 10B, the controller 170 displays a hidden notification panel 460 according to the flick gesture 455. In this example, the notification panel 460 is an environment setting panel including control items such as WiFi ON/OFF, GPS ON/OFF, volume control, etc.

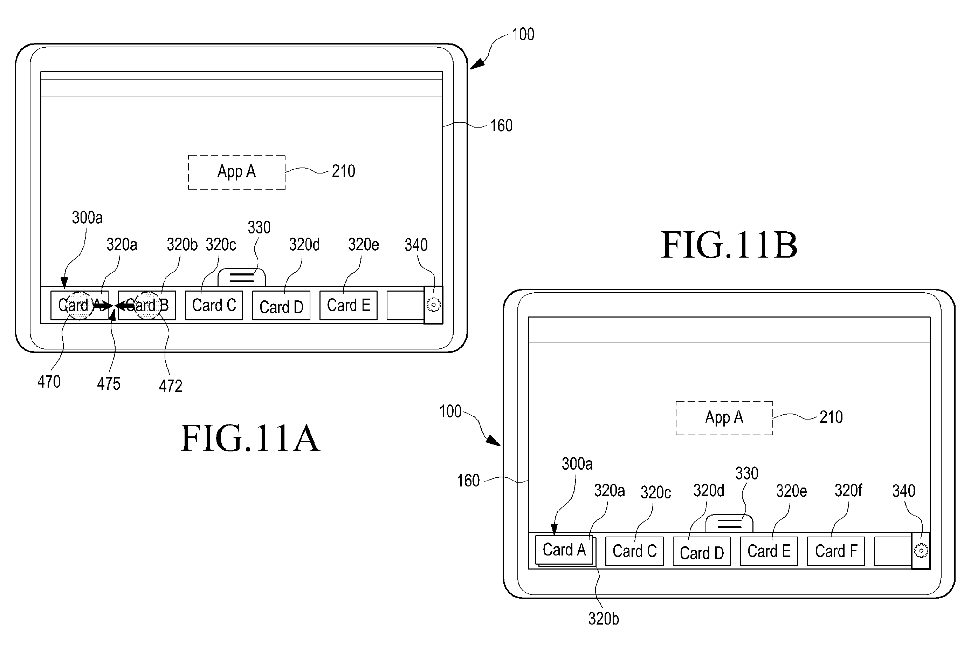

FIGs. 11A to 12B are diagrams illustrating examples of screen displays according to an operation of grouping glance cards according to an embodiment of the present invention.

Referring to FIG. 11A, if the user simultaneously touches a glance card A 320a and a glance card B 320b by using, for example, a thumb and an index finger, as indicated by 470 and 472, and then performs a pinch-in gesture 475 of bringing the thumb and the index finger toward each other, then the controller 170 displays the glance card A 320a and the glance card B 320b overlappingly, as illustrated in FIG. 11B. Although not shown in FIG. 11B, if the glance card A 320a and the glance card B 320b belong to the same category, the controller 170 may also overlappingly display the glance card C 320c and the glance card D 320d under another identical category automatically without a user's gesture.

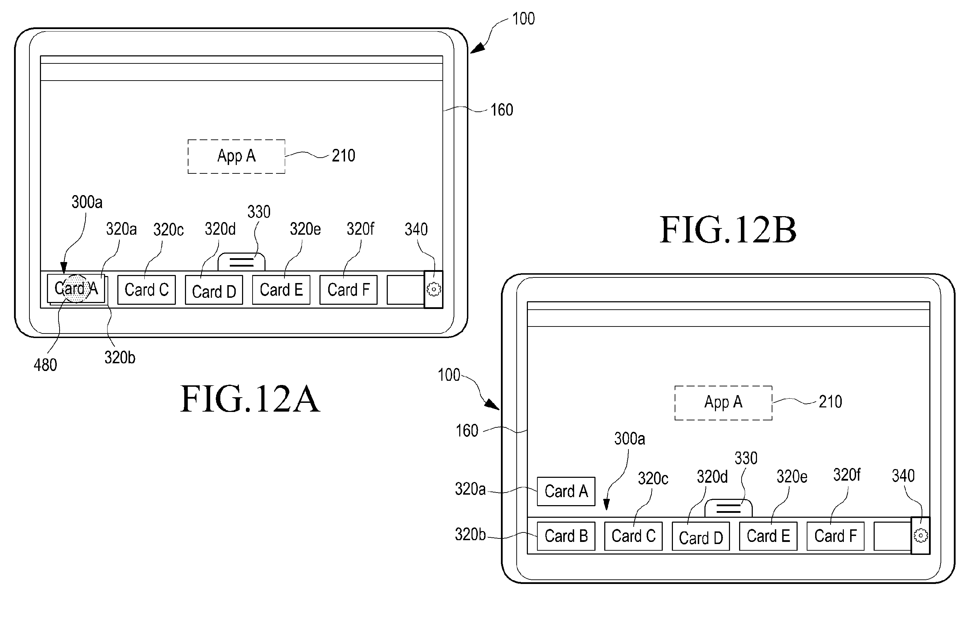

Referring to FIG. 12A, if the user performs a tap gesture 480 on the overlapping glance cards 320a and 320b, the controller 170 displays the glance cards 320a and 320b by spreading out the overlapping glance cards 320a and 320b such that they no longer overlap one another, as illustrated in FIG. 12B.

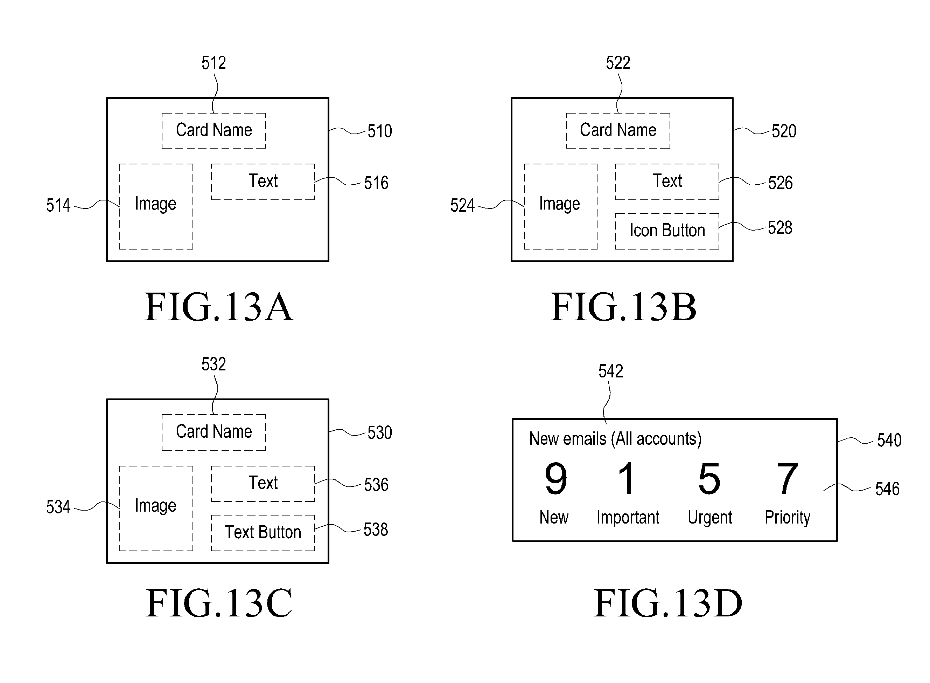

FIGs. 13A to 13D are diagrams illustrating various examples of glance cards according to an embodiment of the present invention.

Referring to FIG. 13A, a glance card 510 includes a card name object 512 (or a text object) that describes a type/category of the glance card 510 and an image object 514 and a text object 516 that describe details of the glance card 510. Once the user touches an arbitrary position in the glance card 510, the controller 170 executes an application corresponding to the glance card 510.

Referring to FIG. 13B, a glance card 520 includes a card name object 522 (or a text object) that describes a type/category of the glance card 510, an image object 524 and a text object 526 that describe details of the glance card 520, and an icon button 528 that can be selected by a user to immediately execute a function related to the details of the glance card 520. If the user touches an arbitrary position in the glance card 520, the controller 170 executes an application corresponding to the glance card 520.

Referring to FIG. 13C, a glance card 530 includes a card name object 532 that describes a type/category of the glance card 530, an image object 534 and a text object 536 that describe details of the glance card 530, and a text button 538 that can be selected by a user to immediately execute a function related to the details of the glance card 530. If the user touches an arbitrary position in the glance card 530, the controller 170 executes an application corresponding to the glance card 530.

Referring to FIG. 13D, a glance card 540 includes a card name object 542 that describes a type/category (for example, a new e-mail) of the glance card 540 and a text object 546 (for example, the number of new e-mails, the number of important e-mails, the number of urgent e-mails, and/or the number of high-priority e-mails) that describe details of the glance card 540. Glance cards under such categories merely provide information to a user, and even when the user touches an arbitrary position in a glance card, the controller 170 does not perform any additional operations.

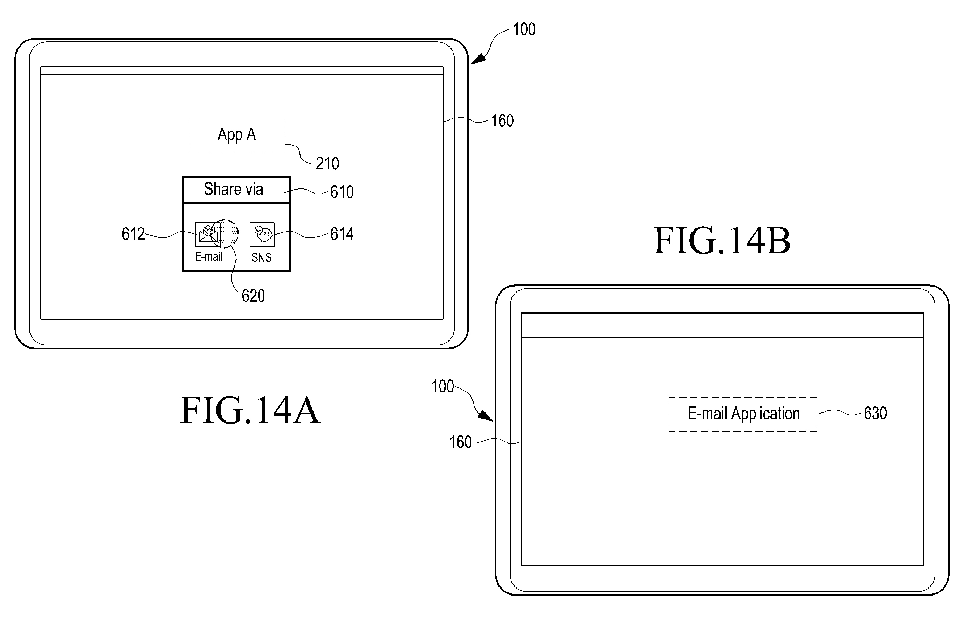

FIGs. 14A and 14B are diagrams illustrating examples of screen displays according to an operation of hiding glance cards according to an embodiment of the present invention.

Referring to FIG. 14A, when a "Share via" window 610 including a plurality of items (e.g., an e-mail application 612 and an SNS application 614) for sharing information is displayed on the screen 210 of the application A, if the user selects an e-mail application item 612, the controller 170 displays an e-mail application screen 630 as illustrated in FIG. 14B. In the example of FIG. 14B, the controller 170 does not display glance cards, even if glance information corresponding to the e-mail application exists. More generally, according to an embodiment of the present invention, if an application is executed through a "Share via" window such as that illustrated in FIG. 14A, the controller 170 does not display glance cards corresponding to the executed application.

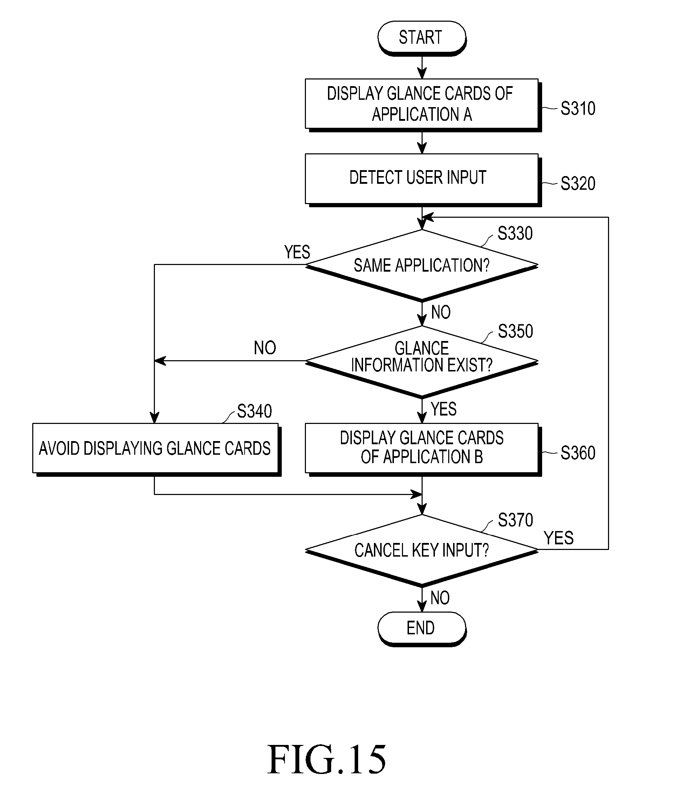

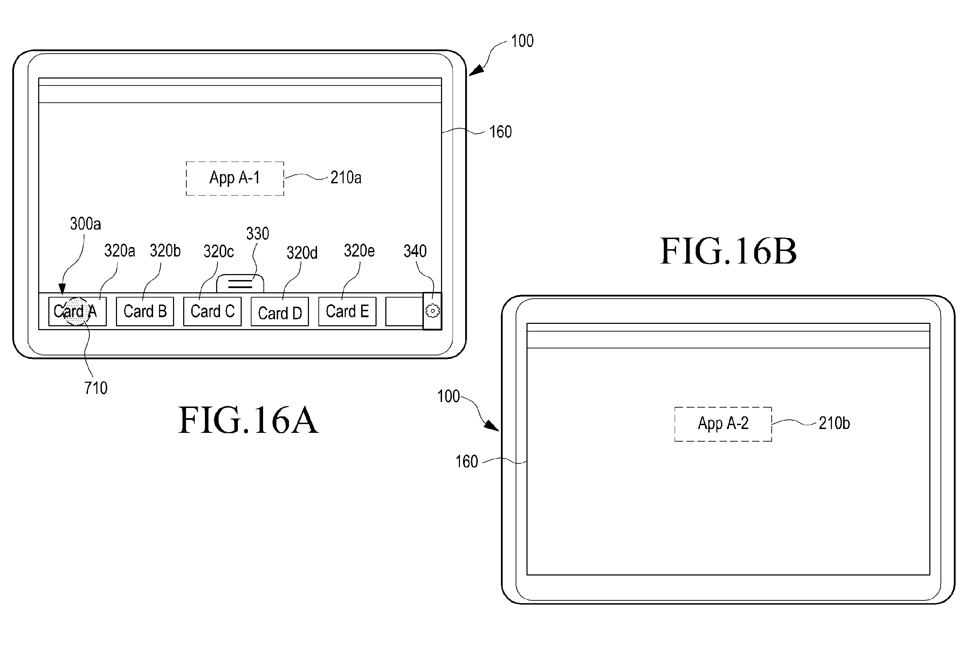

FIG. 15 is a flowchart illustrating a method for providing glance information according to another embodiment of the present invention, and FIGs. 16A to 17B are diagrams illustrating examples of screen displays according to the method for providing glance information according to another embodiment of the present invention.

Step S310 is a process of displaying glance cards of the application A. In step S310, the controller 170 checks glance information corresponding to the executed application A, and determines at least one glance card indicating the checked glance information. The controller 170 displays the determined glance cards on the display unit 160.

Step S320 is a process of detecting a user input. In step S320, the controller 170 detects a user's selection of a glance card or a user's selection of an executable object of the glance card.

For example, referring to FIG. 16A, a first screen 210a of the application A corresponding to the executed application A and a plurality of glance cards 320a to 320e corresponding to the application A are displayed on the display unit 160.

When the user performs a tap gesture 710 on the glance card A 320a, the controller 170 detects selection of the glance card A 320a or an executable object of the glance card A 320a by using the tap gesture.

Step S330 is a process of determining whether an application corresponding to user's selection is a currently executed application.

In step S330, the controller 170 determines whether the application corresponding to user's selection is a currently executed application (that is, the application A in the present example). The controller 170 executes an application or function corresponding to user's selection, and execution of the application or function may include switchover to another application screen of the same application or switchover to a screen of another application.

The controller 170 performs step S340 if the application corresponding to user's selection is the currently executed application (i.e., the application A). Otherwise, the controller 170 performs step S350.

Step S340 is a process of avoiding display of (or hiding) glance cards.

In step S340, if the application corresponding to the user's selection is the currently executed application (that is, the application A), the controller 170 hides the glance cards and displays a second screen of the application A, which is switched by the user's selection. The operation of hiding the glance cards may include or may not include an operation of terminating a glance panel.

For example, referring to FIG. 16B, only a second screen 210b of the application A is displayed on the display unit 160 and a plurality of glance cards that are set corresponding to the application A are not displayed on the display unit 160.

Step S350 is a process of determining whether glance information exists.

In step S350, the controller 170 checks glance information of an application B corresponding to a user's selection. If there is no glance information corresponding to application B, the controller 170 goes to step S340, such that glance cards are not displayed on the display unit 160.

Step S360 is a process of displaying glance cards of the application B.

In step S360, the controller 170 checks the glance information corresponding to the executed application B and determines at least one glance card indicating the checked glance information. The controller 170 displays the determined glance cards on the display unit 160.

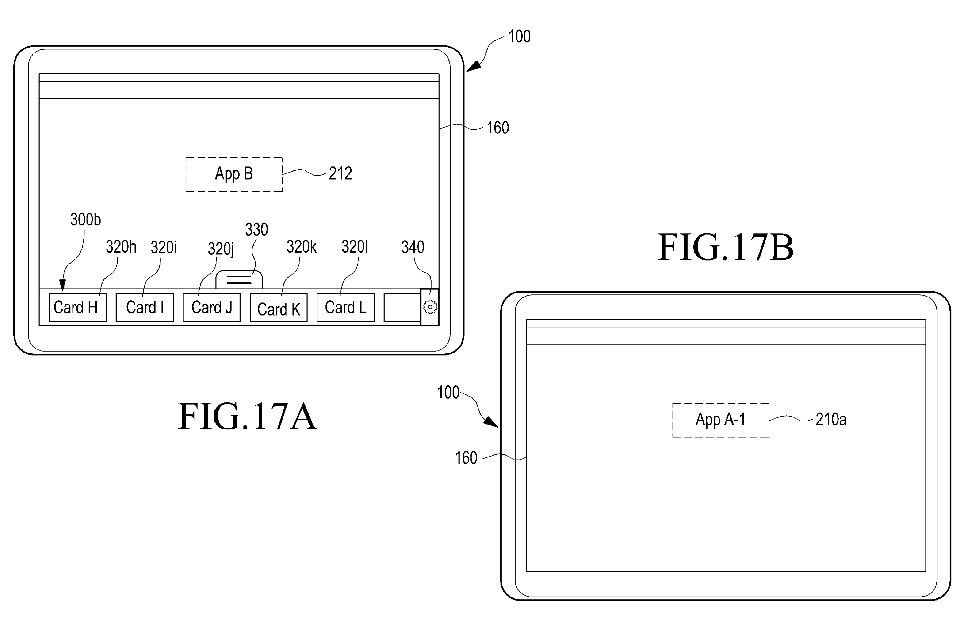

Referring to FIG. 17A, an application screen 212 corresponding to the executed application B and a glance panel 300b including a plurality of glance cards 320h, 320i, 320j, 320k, and 3201 corresponding to the application B are displayed on the display unit 160.

Step S370 is a process of determining whether a cancel key (or a back key) is input. In step S370, the controller 170 determines whether a cancel key is input to request display of an application screen that was previously displayed immediately before the currently displayed application screen.

The controller 170 performs step S330 if the cancel key is input.

The controller 170 determines whether an application corresponding to a user input (i.e., selection of the cancel key) is a currently executed application. If the application corresponding to the user input (i.e., selection of the cancel key) is the currently executed application, the controller 170 does not display the glance cards on the display unit 160, as illustrated in FIG. 17B.

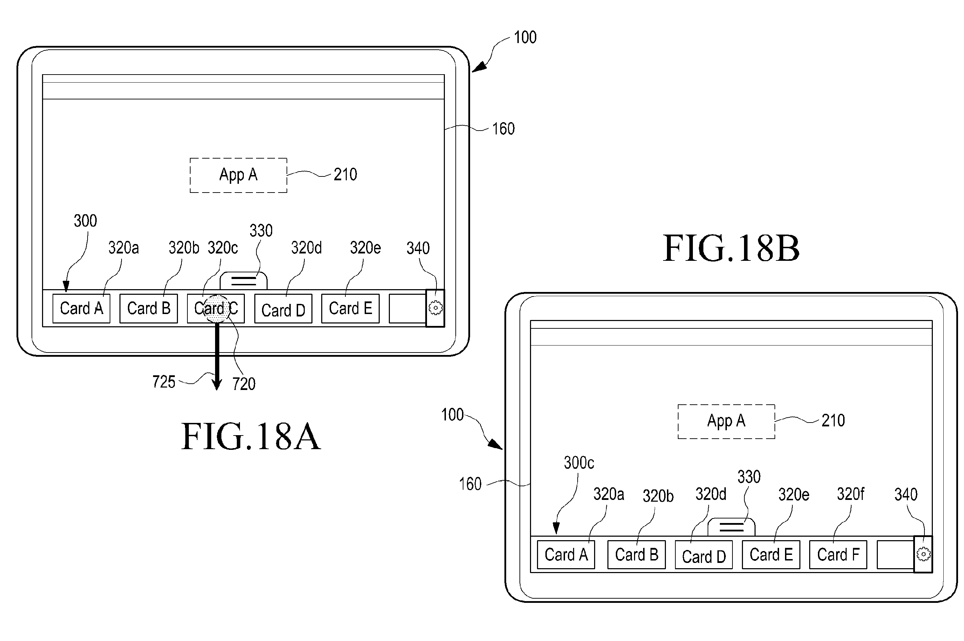

FIGs. 18A to 20B are diagrams illustrating examples of screen displays according to methods for editing glance information according to various embodiments of the present invention.

Referring to FIG. 18A, if the user selects a glance card C 320c as indicated by 720 and performs a swipe-down gesture 725, the controller 170 displays a glance panel 300c from which the glance card C 320c is discarded, as illustrated in FIG. 18B. The controller 170 stores discard information regarding the glance card C 320c in environment settings of the glance function. If the application A is executed again, after a previous termination of the application A, the controller 170 displays the glance panel 300c from which the glance card C 320c is discarded, as illustrated in FIG. 18B.

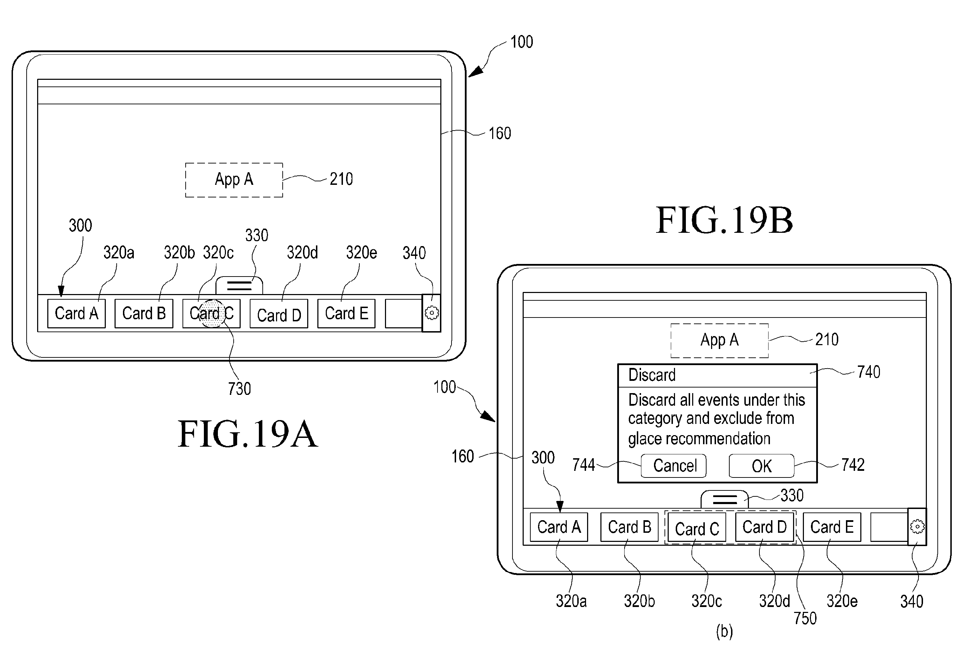

Referring to FIG. 19A, if the user selects the glance card C 320c as indicated by 730 and performs a touch & hold gesture for a preset time (for example, 1 second), the controller 170 groups and highlights the glance card C 320c and a glance card D 320d under the same category and displays a guide window 740 as illustrated in FIG. 19B. The guide window 740 includes a text for confirming whether to discard all glance cards under a category of the glance card C 320c, an OK button 742 for confirming the discard, and a cancel button 744 for canceling the discard.

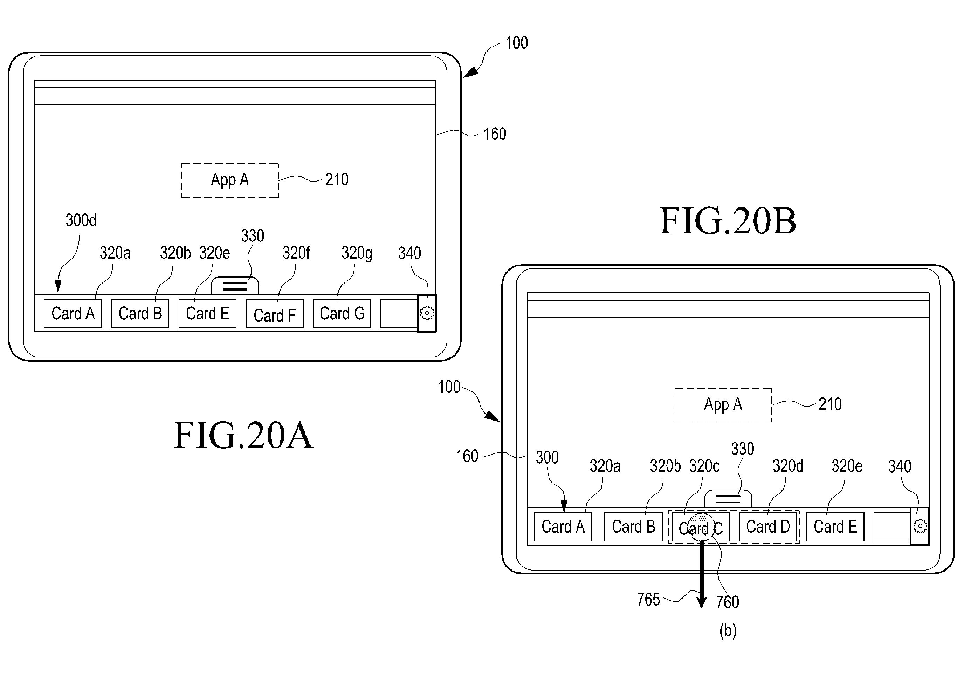

Referring to FIG. 20A, if the user selects the OK button 742, the controller 170 displays the glance panel 300d from which the glance cards C 320c and D 320d are discarded. The controller 170 stores discard information regarding the glance cards C 320c and D 320d in the environment settings of the glance function. If the application A is executed again after termination of the application A, the controller 170 displays the glance panel 300d from which the glance cards C 320c and D 320d are discarded, as illustrated in FIG. 20A.

In another example for discarding a category, referring to FIG. 20B, if the user selects the glance card C 320c as indicated by 760 and performs a touch & hold gesture for a preset time (for example, 1 second), the controller 170 groups and highlights the glance card C 320c and the glance card D 320d under the same category. When the glance card C 320c and the glance card D 320d are displayed highlighted as a group, if the user performs a swipe-down gesture 765, the controller 170 displays the glance panel from which the glance card C 320c and the glance card D 320d are discarded.

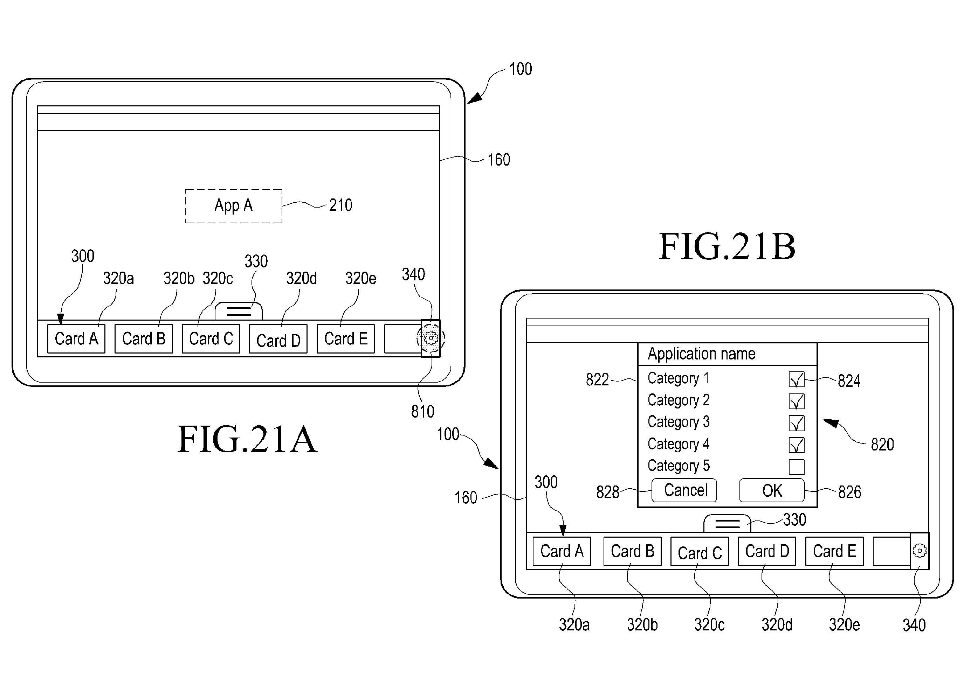

FIGs. 21A and 21B are diagrams illustrating an environment setting method for a glance function according to an embodiment of the present invention.

If the user selects an environment setting item 340, as indicated by 810 as illustrated in FIG. 21A, the controller 170 displays an environment setting window 820 for a currently executed application, as illustrated in FIG. 21B. The environment setting window 820 includes category items 822 of the glance cards, check boxes 824 for selecting or releasing selection of the category items 822, an OK button 826 for confirming discard of the selected category items, and a cancel button 828 for canceling discard of the selected category items.

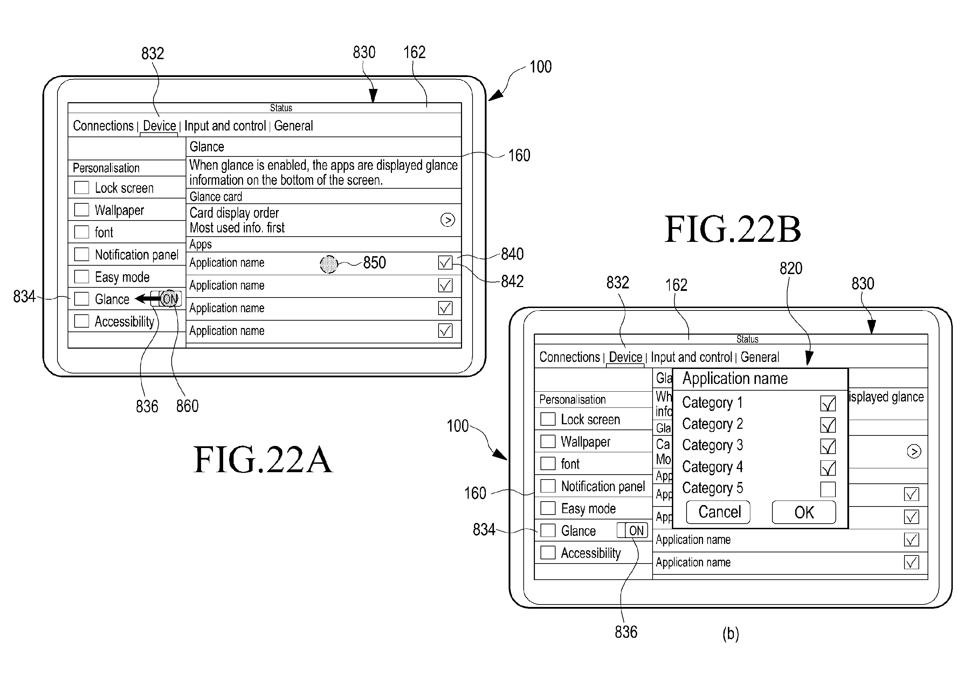

FIGs. 22A to 23B are diagrams illustrating an environment setting method for a glance function according to another embodiment of the present invention.

Referring to the method FIGs. 22A to 23B, if the user touches a status bar of the display unit 160 and performs a flick-down gesture as illustrated in FIG. 10A, the controller 170 displays an environment setting window 830, as illustrated in FIG. 22A. The environment setting window 830 includes a device tab 832 for device-related environment settings, and if the user selects the device tab 832, the controller 170 displays items for device-related environment settings, which include a glance function item 834. Together with the glance function item 834, an on/off button 836 for turning on/off the glance function is provided. If the user selects the glance function item 834, the controller 170 displays application items 840 to which the glance function is to be applied and check boxes 842 for selecting or releasing selection of the application items 840.

If the user selects a particular application item as indicated by 850 as illustrated in FIG. 22A, the controller 170 displays an environment setting window 820 for the selected application, as illustrated in FIG. 22B. The environment setting window 820 displays category items of the glance cards and check boxes for selecting or releasing selection of the category items.

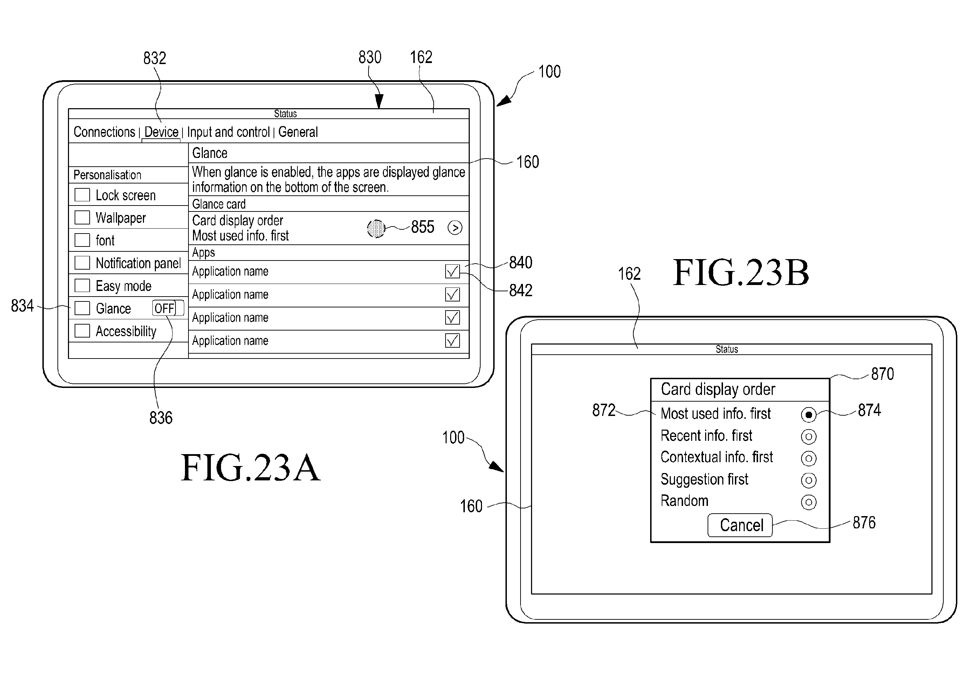

If the user selects an on/off button 836 for turning on/off the glance function and performs a drag-left gesture 860 as illustrated in FIG. 22A, the controller 170 sets the glance function to the OFF state as illustrated in FIG. 23A.

If the user selects a card display order item for selecting a display order of the glance cards as indicated by 855 as illustrated in FIG. 23A, the controller 170 displays a display order window 870 of the glance cards as illustrated in FIG. 23B. The display order window 870 displays priority items 872 such as a most used information first item, a recent information first item based on generation/use/access date/time, a contextual information first item based on a current state/environment (time, place, and the like), a suggestion first item based on preset suggestion rules, and a random item for setting an order of cards at random, radio buttons 874 for selecting one of the priority items 872, and a cancel button 876 for returning to a previous screen.

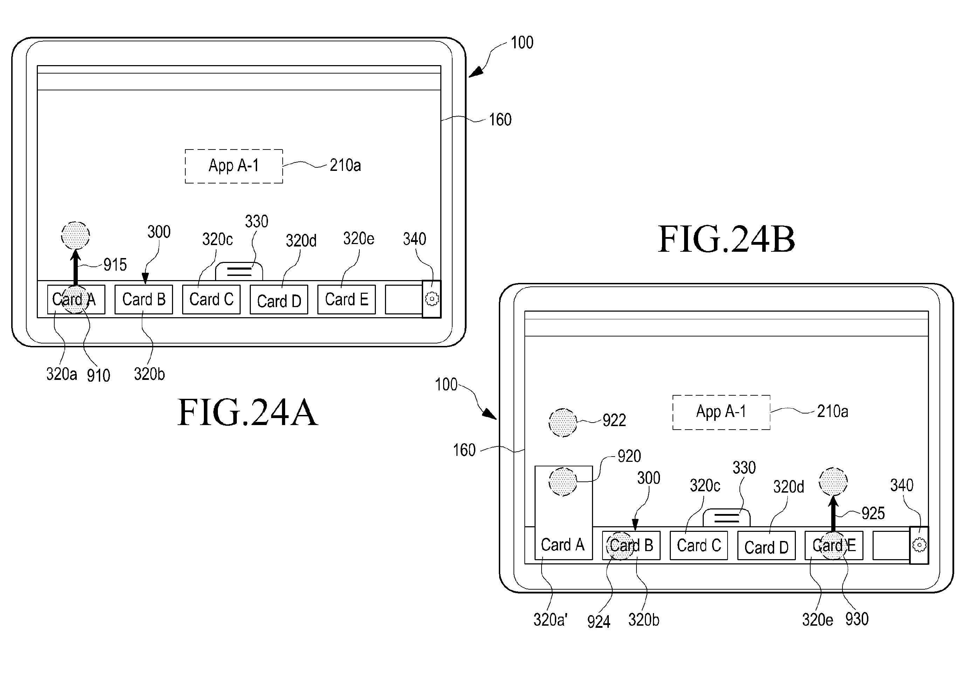

FIGs. 24A to 25B are diagrams illustrating a method for providing glance information according to another embodiment of the present invention.

If the user selects the glance card A 320a as indicated by 910 and performs a drag-up gesture 915, as illustrated in FIG. 24A, the controller 170 upwardly extends and displays the glance card A 320a as a glance card A 320a' and displays details of the glance card A, as illustrated in FIG. 24B. For example, if the glance card A prior to extension (i.e., as shown in FIG. 24A) does not include an image object, an image object may be additionally displayed in the glance card A as the glance card A is extended.

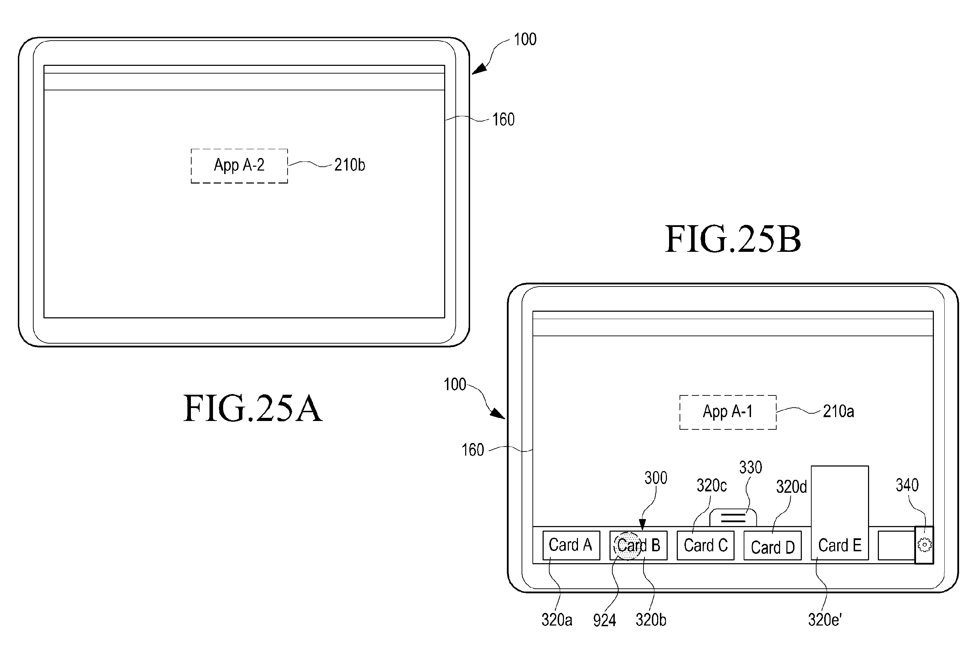

Referring to FIG. 24B, if the user selects the extended glance card A 320a', as indicated by 920, selects a first screen 210a of the application A, as indicated by 922, or selects a glance card B 320b, as indicated by 924, the controller 170 hides the glance cards and displays the second screen of the application A switched according to the user's selection, if the application corresponding to user's selection is the currently executed application (i.e., the application A), such as illustrated in FIG. 25A. The operation of hiding the glance cards may or may not include an operation of terminating display of the glance panel.

Referring to FIG. 25A, only the second screen 210b of the application A is displayed on the display unit 160 and the plurality of glance cards that correspond to the application A are no longer displayed on the display unit 160. If the application corresponding to user's selection is an application (i.e., the application B) other than the currently executed application (i.e., the application A) and the glance information of the application B exists, the controller 170 displays a screen of the application B and glance cards corresponding to the application B.

If the user selects a glance card E 320e, as indicated by 930, and performs a drag-up gesture 925 as illustrated in FIG. 24B, the controller 170 upwardly extends and displays the glance card E 320e as a glance card E 320e' and displays details of the glance card E as illustrated in FIG. 25B.

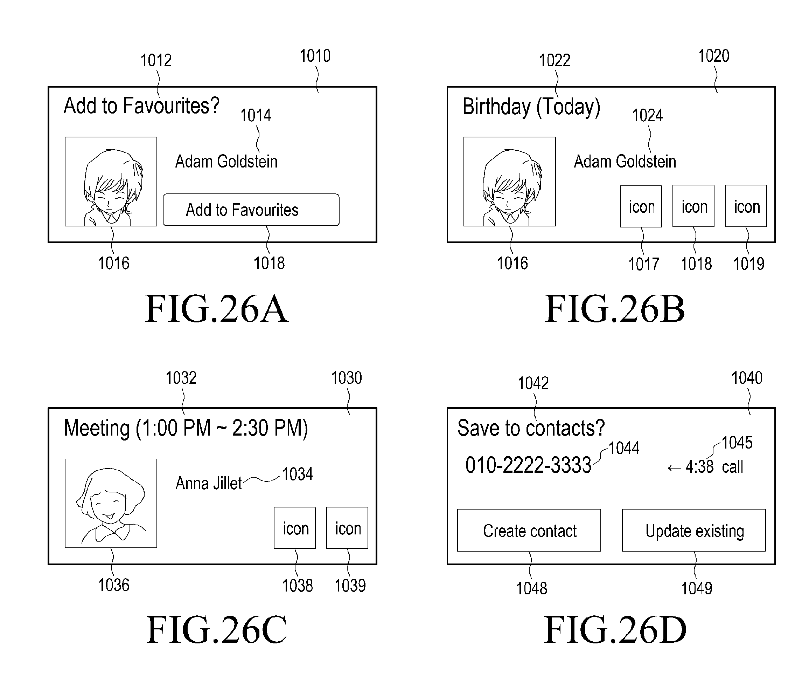

FIGs. 26A to 26D are diagrams illustrating examples of glance cards corresponding to a contact/phone application according to an embodiment of the present invention.

Referring to FIG. 26A, a first glance card 1010 belongs to a favorites category, and includes a card name object 1012 "Add to Favourites?", a text object 1014 corresponding to a sender IDentification (ID) or a contact name "Adam Goldstein", an image object 1016 corresponding to a photo of a contact, and a button 1018 for adding contact information to Favorites. A contact list of Favorites is stored in the storage 120. The controller 170 detects, as glance information, a contact for which records of at least three instances of call reception/call sending event (i.e., instances of incoming/outgoing calls) starting from a preset date are in a call log (or a call log database) among contacts of a contact database stored in the storage 120. If a glance card for the contact is discarded by the user, a call reception/call sending count value for the contact is initialized to 0. If call reception/call sending events occur greater than or equal to three times after an initialization (i.e., if the count value become greater than 3), the controller 170 detects the contact as glance information.

Referring to FIG. 26B, a second glance card 1020 belongs to a birthday category, and includes a card name object 1022 "Birthday (Today)", a text object 1024 corresponding to a sender ID or a contact name "Adam Goldstein", an image object 1016 corresponding to a photo of a contact, a first button 1017 for dialing a contact, a second button 1018 for sending a message to the contact, and a third button 1019 for chatting at the contact. The controller 170 detects, as glance information, a contact corresponding to a birthday occurring today, from among the contacts of the contact database stored in the storage 120.

Referring to FIG. 26C, a third glance card 1030 belongs to a meeting category, and includes a card name object 1032 "Meeting (1:00PM2∼30PM)", a text object 1034 corresponding to a sender ID or a contact name "Anna Jillet", an image object 1036 corresponding to a photo of a contact, a first button 1038 for dialing the contact, and a second button 1039 for sending a message to the contact. The controller 170 detects, as glance information, a contact registered as a participant from a schedule registered in a database of a schedule management application, such as "S Planner".

Referring to FIG. 26D, a fourth glance card 1040 belongs to a new contact category and includes a card name object 1042 "Save to contacts?", a first text object 1044 corresponding to a sender ID or a phone number "010-2222-3333", a second text object 1045 corresponding to call reception/call sending log information, a first button 1048 for registering a new contact to a contact database, and a second button 1049 for updating an existing contact. The contact database is stored in the storage 120.

The controller 170 detects contact information (e.g., a sender ID) as glance information if the contact information, for which records of at least three instances of call reception/call sending events starting from a preset date are in the call log (or the call log database), is not registered in the contact database. If a glance card for the contact information is discarded by the user, a call reception/call sending count value for the contact information is initialized to 0 and if call reception/call sending events occur greater than or equal to three times after initialization, the controller 170 detects the contact information as the glance information.

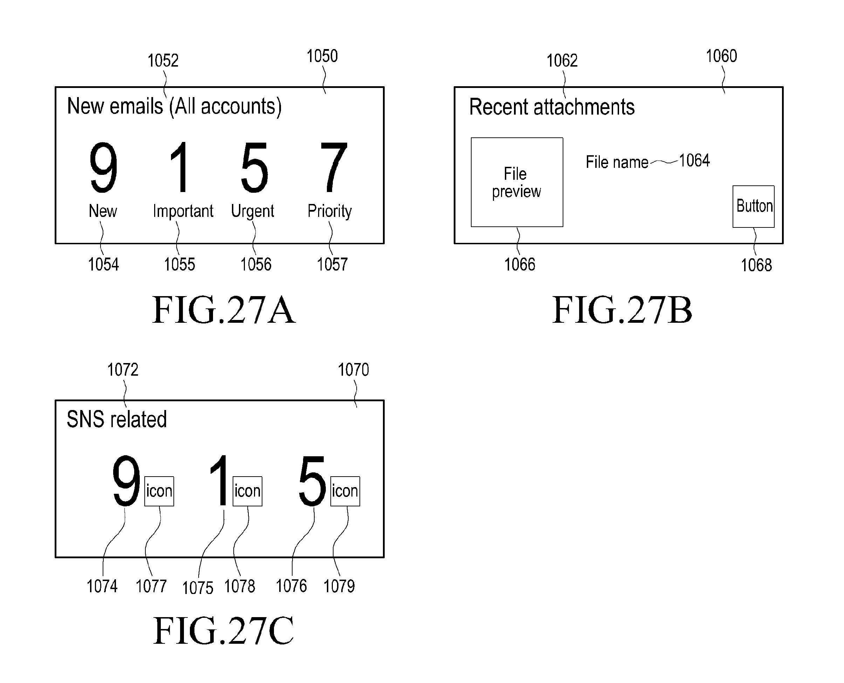

FIGs. 27A to 28B are diagrams illustrating examples of glance cards corresponding to an e-mail application according to an embodiment of the present invention.

Referring to FIG. 27A, a fifth glance card 1050 belongs to a new e-mail category, and includes a card name object 1052 "New emails (All accounts)", a first text object 1054 corresponding to the total number of new e-mails, a second text object 1055 corresponding to the total number of important e-mails, a third text object 1056 corresponding to the total number of urgent e-mails, and a fourth text object 1057 corresponding to the total number of high-priority e-mails.

Referring to FIG. 27B, a sixth glance card 1060 belongs to an attached file category, and includes a card name object 1062 "Recent attachments", a text object 1064 corresponding to a file name (that may include an extension), an image object 1066 corresponding to preview of a file, and a button 1068 for downloading an attached file.

Referring to FIG. 27C, a seventh glance card 1070 belongs to an SNS-related mail (or message) category, and includes a card name object 1072 "SNS related", a first text object 1074 corresponding to the total number of first SNS-related mails (or messages), a second text object 1075 corresponding to the total number of second SNS-related mails (or messages), a third text object 1076 corresponding to the total number of third SNS-related mails (or messages), a first button (or icon) 1077 for reading a corresponding notification through a first SNS, a second button (or icon) 1078 for reading a corresponding notification through a second SNS, and a third button (or icon) 1079 for reading a corresponding notification through a third SNS.

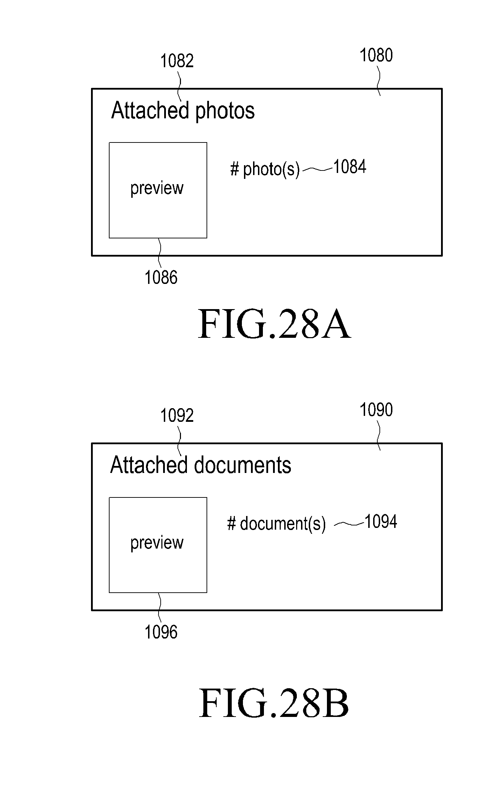

Referring to FIG. 28A, an eighth glance card 1080 belongs to an attached photo category, and includes a card name object 1082 "Attached photos", a text object 1084 corresponding to the total number of photos attached to a received e-mail, and an image object 1086 corresponding to a photo attached to a recent e-mail.

Referring to FIG. 28B, a ninth glance card 1090 belongs to an attached document category, and includes a card name object 1092 "Attached documents", a text object 1094 corresponding to the total number of documents attached to received e-mails, and an image object 1096 corresponding to preview of a document attached to a recent e-mail.

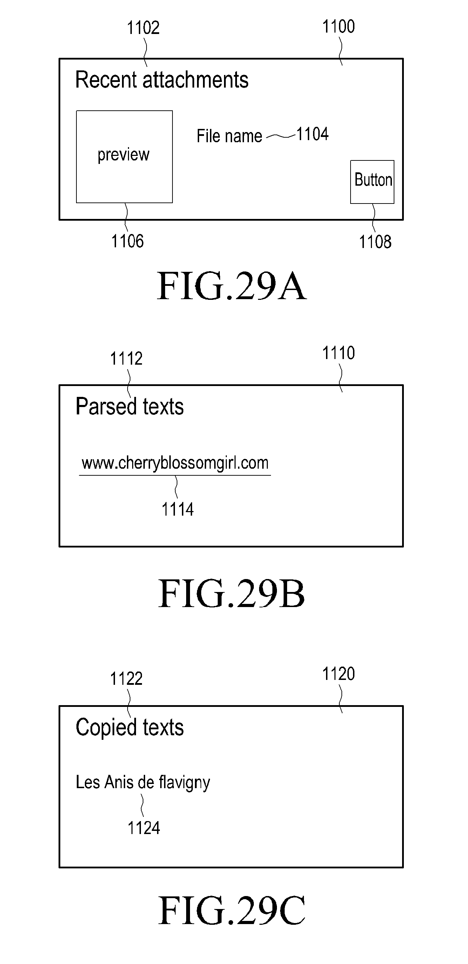

FIGs. 29A to 30B are diagrams illustrating examples of glance cards corresponding to a message application according to an embodiment of the present invention.

Referring to FIG. 29A, a tenth glance card 1100 belongs to an attached file category, and includes a card name object 1102 "Recent attachments", a text object 1104 corresponding to a file name (that may include a file extension), an image object 1106 corresponding to preview of a file, and a button 1108 for downloading an attached file.

Referring to FIG. 29B, an eleventh glance card 1110 belongs to a parsed text category, and includes a card name object 1112 "Parsed texts" and a text object 1114 corresponding to a parsed text. The parsed text may include a phone number, an e-mail address, a Uniform Resource Locator (URL), or the like.

Referring to FIG. 29C, a twelfth glance card 1120 belongs to a copied text category, and more specifically, a category of texts copied from received/sent messages, and includes a card name object 1122 "Copied texts" and a text object 1124 corresponding to a copied text.

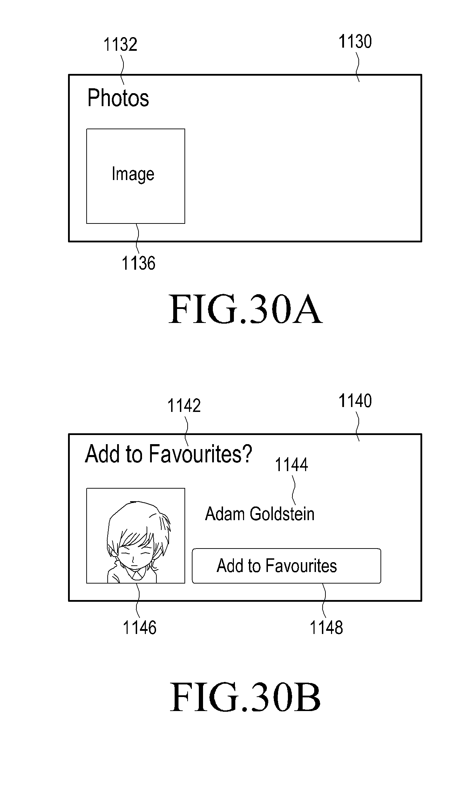

Referring to FIG. 30A, a thirteenth glance card 1130 belongs to an Attached Photo category, and more specifically, to a category of photos attached to a received/sent message. The thirteenth glance card 1130 includes a card name object 1132 "Photos" and an image object 1136 corresponding to a photo attached to a received/sent message.

Referring to FIG. 30B, a fourteenth glance card 1140 belongs to a Favorites category, and includes a card name object 1142 "Add to Favourites?", a text object 1144 corresponding to a sender ID or a contact name "Adam Goldstein", an image object 1146 corresponding to a photo of a contact, and a button 1148 for adding contact information to favorites.

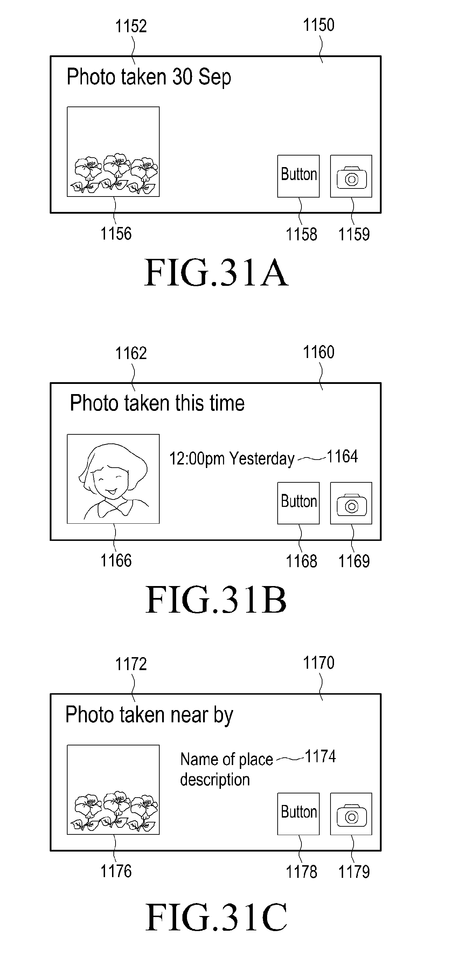

FIGs. 31A to 31C are diagrams illustrating examples of glance cards corresponding to a gallery application according to an embodiment of the present invention.

Referring to FIG. 31A, a fifteenth glance card 1150 belongs to a photo-based photographing recommendation category, and more specifically, to a category for recommending photographing based on a photo/time corresponding to the same date, in a previous year, as today's date. The fifteenth glance card 1150 includes a card name object 1152 "Photo taken 30 Sep", an image object 1156 corresponding to a photo, a button 1158 for viewing an album, and a button 1159 for driving (or executing) a camera application.

Referring to FIG. 31B, a sixteenth glance card 1160 belongs to a photo-based photographing recommendation category, and more specifically, to a category for recommending photographing based on a photo/time associated with a same range of times as the current range of times. The sixteenth glance card 1160 includes a card name object 1162 "Photo taken this time", a text object 1164 corresponding to date/time information, an image object 1166 corresponding to a photo, a button 1168 for viewing an album, and a button 1169 for driving (or executing) a camera application

Referring to FIG. 31C, a seventeenth glance card 1170 belongs to a place-based photographing recommendation category, and more specifically, to a category of recommending photographing based on a photo taken at the current place. The seventeenth glance card 1170 includes a card name object 1172 "Photo taken nearby", a text object 1174 corresponding to current place information, an image object 1176 corresponding to a photo, a button 1178 for viewing an album, and a button 1179 for driving (or executing) a camera application.

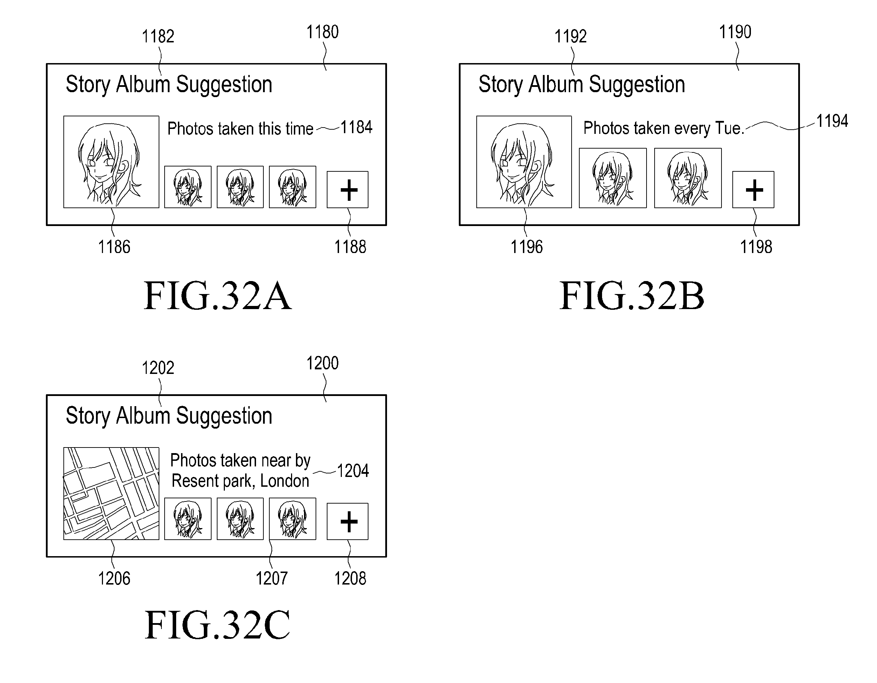

FIGs. 32A to 32C are diagrams illustrating examples of glance cards corresponding to an album application according to an embodiment of the present invention.

Referring to FIG. 32A, an eighteenth glance card 1180 belongs to a photo-based album recommendation category, and more specifically, to a category of recommending generation of an album including photos taken in the same range of times. The eighteenth glance card 1180 includes a card name object 1182 "Story Album Suggestion", a text object 1184 corresponding to time information, a plurality of image objects 1186 corresponding to photos, and a button 1188 for generating an album.

Referring to FIG. 32B, a nineteenth glance card 1190 belongs to a photo-based album recommendation category, and more specifically, to a category for recommending generation of an album including photos taken on the same day in the past. The nineteenth glance card 1190 includes a card name object 1192 "Story Album Suggestion" a text object 1194 corresponding to date/day information (e.g., a date or a week), a plurality of image objects 1196 corresponding to photos, and a button 1198 for generating an album.

Referring to FIG. 32C, a twentieth glance card 1200 belongs to a place-based photographing recommendation category, and more specifically, to a category for recommending generation of an album based on photos taken on the same place. The twentieth glance card 1200 includes a card name object 1202 "Story Album Suggestion", a text object 1204 corresponding to place information, image objects 1206 and 1207 corresponding to maps and photos, and a button 1208 for generating an album.

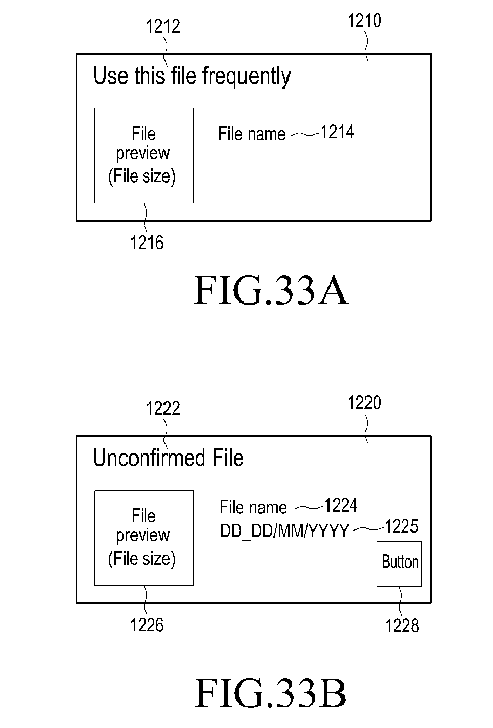

FIGs. 33A and 33B are diagrams illustrating examples of glance cards corresponding to a download/my-file application according to an embodiment of the present invention.

Referring to FIG. 33A, a twenty-first glance card 1210 belongs to a download file category, and more specifically, to a category for providing information about frequently used files among downloaded files. The twenty-first glance card 1210 includes a card name object 1212 "Use this file frequently", a text object 1214 corresponding to a file name (that may include an extension), and an image object 1216 corresponding to preview of a file (that may include a file size).

Referring to FIG. 33B, a twenty-second glance card 1220 belongs to a download file category, and more specifically, to a category for providing information about files that have not yet been executed, from among downloaded files The twenty-second glance card 1220 includes a card name object 1222 "Unconfirmed File", a first text object 1224 corresponding to a file name (that may include an extension), a second text object 1225 corresponding to download information (a download date, a file size, and so forth), an image object 1226 corresponding to a preview of a file (which may include a file size), and a button 1228 for deleting a file.

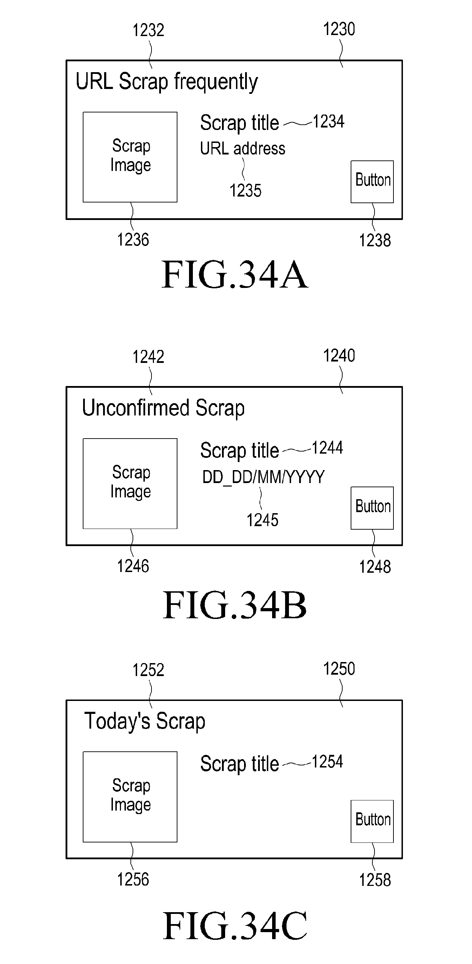

FIGs. 34A to 34C are diagrams illustrating examples of glance cards corresponding to a scrap book application according to an embodiment of the present invention.

Referring to FIG. 34A, a twenty-third glance card 1230 belongs to a scrap category, and more specifically, to a category for providing frequently scrapped URL information among scraps. The twenty-third glance card 1230 includes a card name object 1232 "URL Scrap frequently", a first text object 1234 corresponding to a scrap name (or title), a second text object 1235 corresponding to an URL, an image object 1236 corresponding to a preview of a scrap (which may include a file size), and a button 1238 for driving (or executing) a scrap book application.

Referring to FIG. 34B, a twenty-fourth glance card 1240 belongs to a scrap category, and more specifically, to a category for providing unconfirmed scrap information among scraps. The twenty-fourth glance card 1240 includes a card name object 1242 "Unconfirmed Scrap", a first text object 1244 corresponding to a scrap name (or title), a second text object 1245 corresponding to a scrap date, an image object 1246 corresponding to preview of a scrap (that may include a file size), and a button 1248 for driving (or executing) a scrap book application.

Referring to FIG. 34C, a twenty-fifth glance card 1250 belongs to a scrap category, and more specifically, to a category for providing information about scraps generated today. The twenty-fifth glance card 1250 includes a card name object 1252 "Today's Scrap", a text object 1254 corresponding to a scrap name (title), an image object 1256 corresponding to preview of a scrap (that may include a file size), and a button 1258 for driving (or executing) a scrap book application.

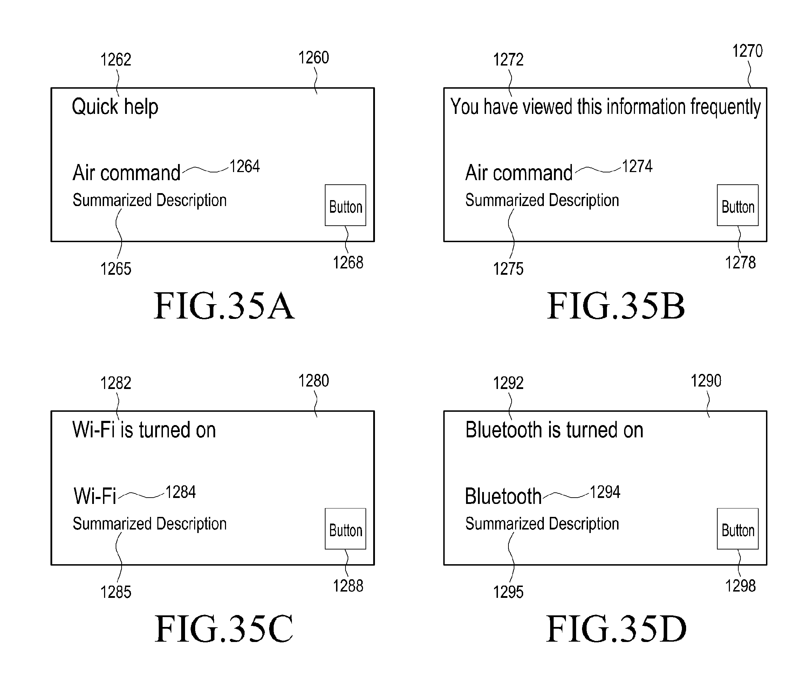

FIGs. 35A to 35D are diagrams illustrating examples of glance cards corresponding to a help application according to an embodiment of the present invention.

Referring to FIG. 35A, a twenty-sixth glance card 1260 belongs to a recent help-related help recommendation category, and more specifically, to a category for providing information about recently-read help information among help information read for a corresponding application. The twenty-sixth glance card 1260 includes a card name object 1262 "Quick help", a first text object 1264 corresponding to an application name, a second text object 1265 corresponding to help information, and a button 1268 for reading a detailed help information.

Referring to FIG. 35B, a twenty-seventh glance card 1270 belongs to a help recommendation category, and more specifically, to a category for providing information about frequently read help information. The twenty-seventh glance card 1270 includes a card name object 1272 "You have viewed this information frequently", a first text object 1274 corresponding to an application name, a second text object 1275 corresponding to a help, and a button 1278 for reading a detailed help.

Referring to FIG. 35C, a twenty-eighth glance card 1280 belongs to a help recommendation category, and more specifically to a category for providing information about a currently executed Wi-Fi function. The twenty-eighth glance card 1280 includes a card name object 1282 "Wi-Fi is turned on", a first text object 1284 corresponding to a name of an executed device, a second text object 1285 corresponding to a help, and a button 1288 for reading detailed help information.

Referring to FIG. 35D, a twenty-ninth glance card 1290 belongs to a help recommendation category, and more specifically, to a category for providing information about currently executed Bluetooth® function. The twenty-ninth glance card 1290 includes a card name object 1292 "Bluetooth is turned on", a first text object 1294 corresponding to a name of an executed device, and a button 1298 for reading detailed help information.

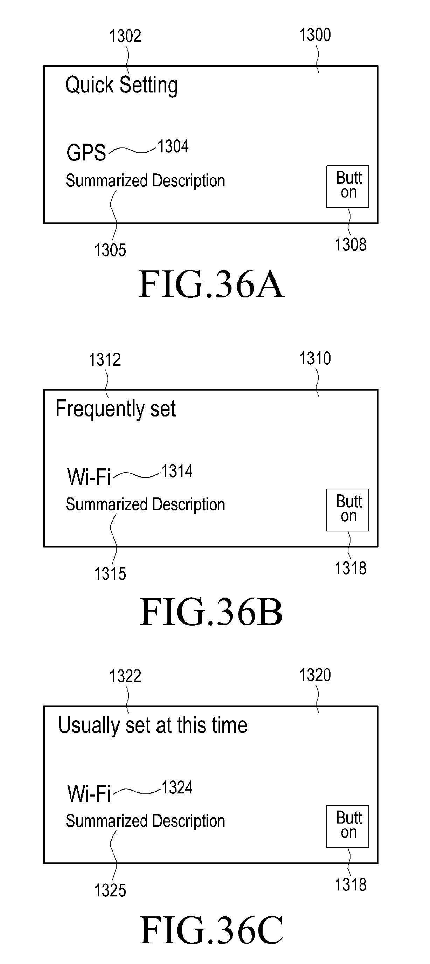

FIGs. 36A to 37B are diagrams illustrating examples of glance cards corresponding to environment settings according to an embodiment of the present invention.

Referring to FIG. 36A, a thirtieth glance card 1300 belongs to an environment setting category, and more specifically, to a category for providing information about a device currently executed in background. The twenty-ninth glance card 1290 includes a card name object 1302 "Quick Setting", a first text object 1304 corresponding to a name of an executed device, a second text object 1305 corresponding to device information, and a button 1308 for turning on/off the device.

Referring to FIG. 36B, a thirty-first glance card 1310 belongs to an environment setting category, and more specifically, to a category for providing information about a frequently set (used) device or feature. The thirty-first glance card 1310 includes a card name object 1312 "Frequently set", a first text object 1314 corresponding to a name of a device, a second text object 1315 corresponding to device information, and a button 118 for turning on/off the device.

Referring to FIG. 36C, a thirty-second glance card 1320 belongs to an environment setting category, and more specifically, to a category for providing information about a device or feature frequently set (used) in the current time zone. The thirty-second glance card 1320 includes a card name object 1322 "Usually set at this time", a first text object 1324 corresponding to a name of a device, a second text object 1325 corresponding to device information, and a button 1328 for turning on/off the device.

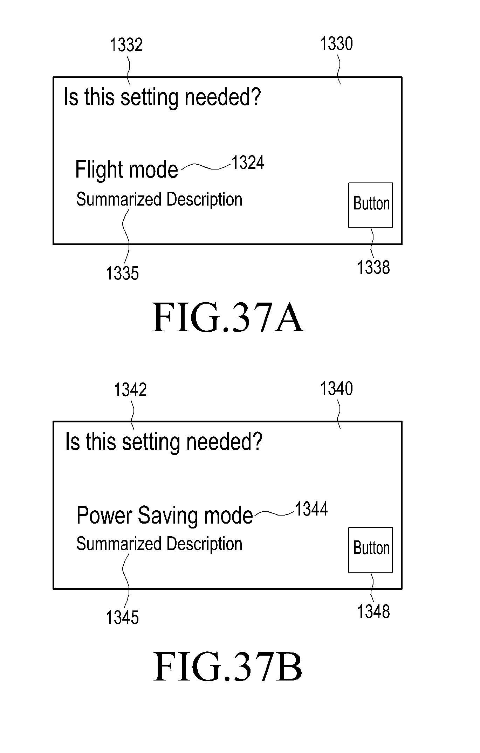

Referring to FIG. 37A, a thirty-third glance card 1330 belongs to an environment setting category, and more specifically, to a category for providing information about a device mode frequently set (used) in the current place. The thirty-third glance card 1330 includes a card name object 1332 "Is this setting needed?", a first text object 1334 corresponding to a device mode name, a second text object 1335 corresponding to device mode information, and a button 1338 for turning on/off the device mode.

Referring to FIG. 37B, a thirty-fourth glance card 1340 belongs to an environment setting category, and more specifically, to a category for providing information about a device mode frequently set (used) in a current device state. The thirty-fourth glance card 1340 includes a card name object 1342 "Is this setting needed?", a first text object 1344 corresponding to a device mode name, a second text object 1345 corresponding to device mode information, ad a button 1348 for turning on/off the device mode.

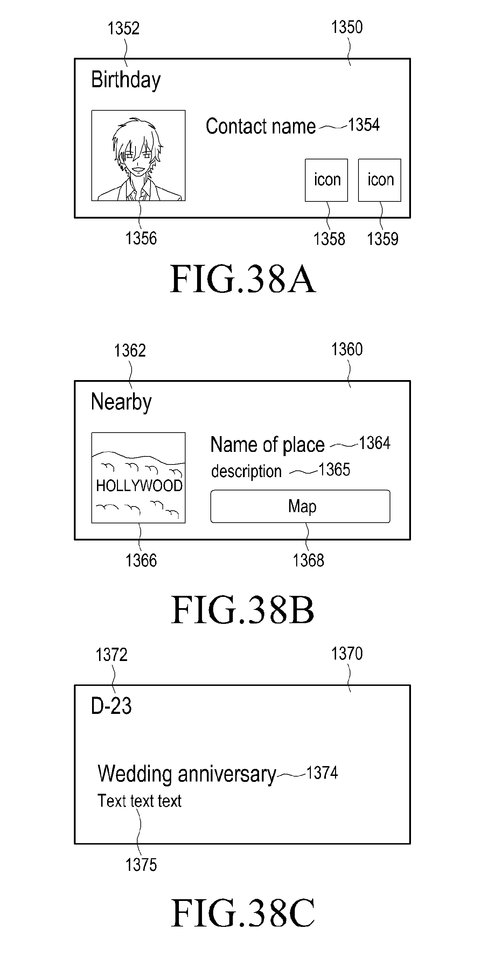

FIGs. 38A to 39C are diagrams illustrating examples of glance cards corresponding to a schedule application according to an embodiment of the present invention.

Referring to FIG. 38A, a thirty-fifth glance card 1350 belongs to a birthday category and includes a card name object 1352 "Birthday", a text object 1354 corresponding to a sender ID or a contact name, an image object 1356 corresponding to a photo of a contact, a first button (or icon) 1358 for dialing a contact, and a second button (or icon) 1359 for sending a message to the contact.

Referring to FIG. 38B, a thirty-sixth glance card 1360 belongs to a place information providing category, and more specifically, to a category for providing photos, names, and descriptions of current and neighboring places. The thirty-sixth glance card 1360 includes a card name object 1362 "Nearby", a first text object 1364 corresponding to a name of the current place, a second text object 1365 corresponding to information about the current place, and a button 1368 for driving (or executing) a map application.

Referring to FIG. 38C, a thirty-seventh glance card 1370 belongs to a D-day information providing category, and includes a card name object 1372 "D-23", a first text object 1374 corresponding to a D-day name (arbitrarily set date, anniversary, or the like), and a second text object 1375 corresponding to D-day information. The D-day may refer to the day that is chosen for the beginning of an important activity.

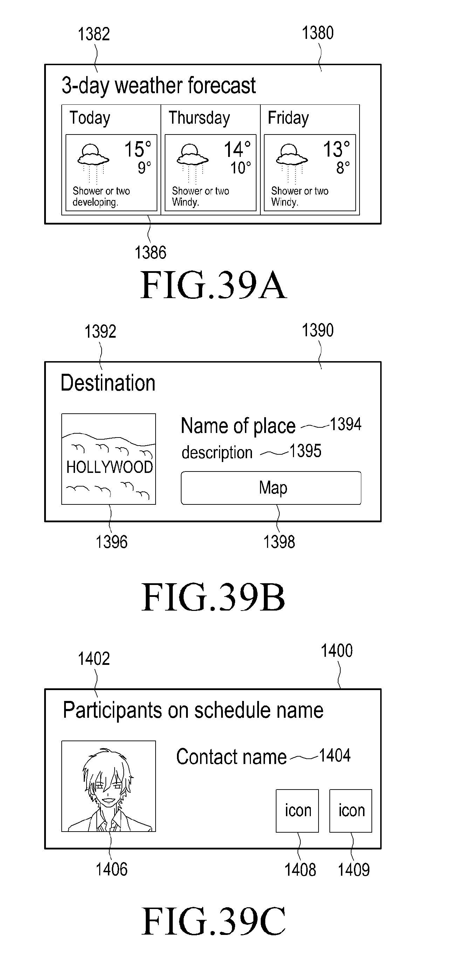

Referring to FIG. 39A, a thirty-eighth glance card 1380 belongs to a weather information providing category, and includes a card name object 1382 "3-day weather forecast" and a text/image object 1386 corresponding to weather information (temperature, rain, snow, etc).

Referring to FIG. 39B, a thirty-ninth glance card 1390 belongs to a place information providing category, and more specifically, to a category for providing a photo, a name, and description of a destination. The thirty-ninth glance card 1390 includes a card name object 1392 "Destination", a first text object 1394 corresponding to a name of the current place, a second text object 1395 corresponding to information about the current place, and a button 1398 for driving the map application.

Referring to FIG. 39C, a fortieth glance card 1400 belongs to a meeting category, and includes a card name object 1402 "Participants on_schedule name", a text object 1404 corresponding to a sender ID or a contact name "Anna Jillet", an image object 1406 corresponding to a photo of a contact, a first button 1408 for dialing the contact, and a second button 1409 for sending a message to the contact.

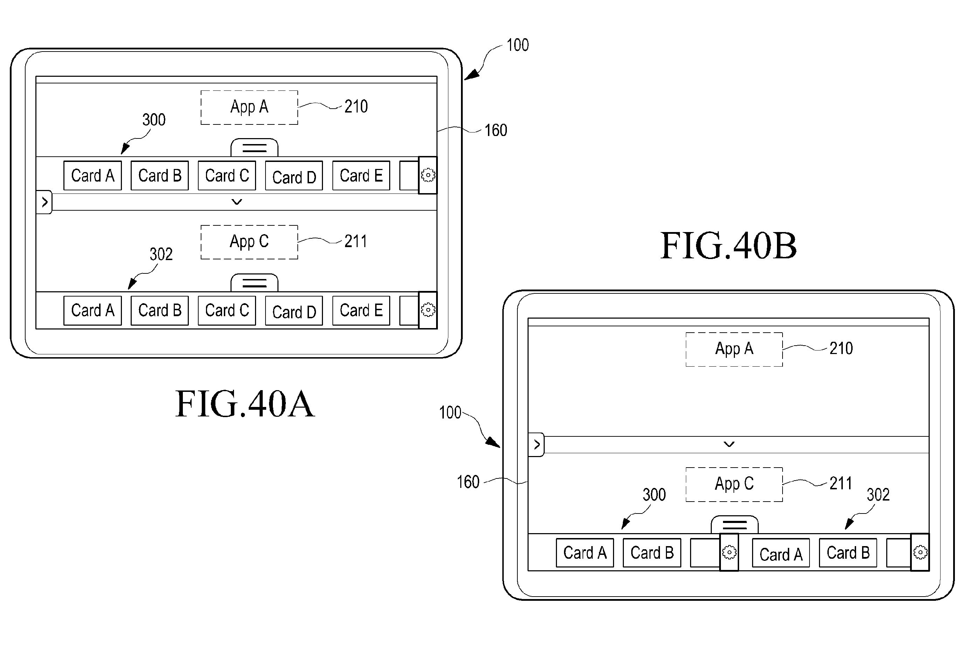

FIGs. 40A and 40B are diagrams illustrating examples of screen displays according to a method for providing a glance panel in a multi-window environment according to an embodiment of the present invention.

Referring to FIG. 40A, if the user selects an icon of the multi-window panel 440 on a screen such as that illustrated in FIG. 9B, the entire screen of the display unit 160 is separated into an upper window and a lower window, in which the screen 210 of application A is displayed on the upper window and a screen 211 of an application C corresponding to the selected icon is displayed on the lower window. The glance panel 300 corresponding to application A is also displayed on the upper window corresponding to application A, and a glance panel 302 corresponding to application C is also displayed on the lower window corresponding to application C.

As an alternative, in the multi-window environment, instead of displaying two glance panels, no glance panels may be provided at all, or, as another alternative, only one glance panel corresponding to the application displayed on the currently activated window may be provided. A user input can be provided with respect to an activated application screen, but not with respect to a deactivated application screen. Alternatively, as illustrated in FIG. 40B, the glance panel corresponding to application A and the glance panel corresponding to application C may be displayed together on one of the upper and lower windows, or glance cards corresponding to application A and glance cards corresponding to application C may be displayed together in a single glance panel. If glance cards of different applications are displayed together on one glance panel, the glance cards of the different applications are displayed separately and distinguished from each other by using different colors and icons.

Referring to FIG. 40B, in the multi-window environment, the entire screen of the display unit 160 is displayed as separated into an upper window and a lower window, such that the screen 210 of application A is displayed on the upper window of the display unit 160, and the screen 211 of application C corresponding to the selected icon is displayed on the lower window of the display unit 160. The glance panel 300 corresponding to application A and the glance panel 302 corresponding to application C are displayed together on the screen 211 of the lower window corresponding to application C.

In a manner similar to that described above regarding the multi-window environment, the same or similar methods may also be applied to a multi-tasking environment in accordance with embodiments of the present invention.

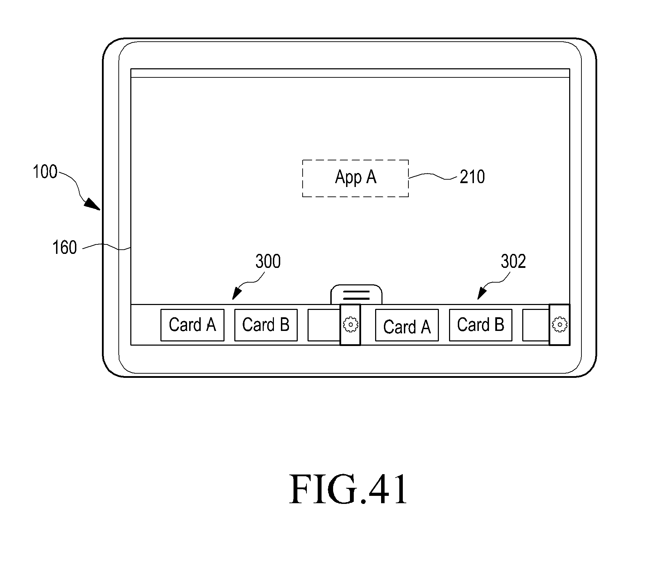

FIG. 41 is a diagram illustrating an example of a screen display according to a method for providing a glance panel in the multi-tasking environment according to an embodiment of the present invention.

Referring to FIG. 41, assuming that application A operates in foreground and application C operates in background, for example, from among the screens of applications A and C, only the screen 210 of application A is displayed on the display unit 160, while the screen of application C is not displayed. The screen of application A and the screen of application C may be switched according to a user input. The glance panel 300 corresponding to application A and the glance panel 302 corresponding to application C may be displayed together on the screen 210 of application A. As an alternative, in the multi-tasking environment, the glance panel may not be provided at all, or, as another alternative only the glance panel of the application currently operating in foreground may be provided. The glance cards corresponding to application A and the glance cards corresponding to application C may be displayed together on one glance panel. As such, if glance cards of different applications are displayed together on one glance panel, the glance cards of the different applications may be separately displayed and distinguished by using different colors or icons.

The above-described embodiments of the present invention may be modified in various ways in accordance with embodiments of the present invention.

For example, application A illustrated in FIG. 4A may be a lock application and an application screen may be a lock screen. As illustrated in FIGs. 22A and 22B, the user may select glance information to be displayed through environment settings, and the user may set only glance cards satisfying a security criterion to be displayed on the lock screen. If a plurality of users use one electronic device (i.e., if a plurality of user accounts exist), the user selects glance information to be displayed on each user account. If a user account is changed by a tap gesture on a plurality of user account icons on the lock screen, existing glance information is discarded and the set glance information may be displayed on the changed user account.

If a third device (for example, a Television (TV)) to be connected with the electronic device exists, a glance card capable of executing a particular function of the third device may be provided without a need to directly control the third device. For example, if a particular video is stored in the TV, a glance card capable of turning on the TV and playing the video may be displayed on the lock screen of the electronic device.

Embodiments of the present invention can be implemented in hardware, software, or a combination thereof. For example, in configurations illustrated in FIGs. 1 and 2, each component, such as storage, a communication unit, or a controller may be configured as a device. The software can be recorded to a volatile or non-volatile storage device such as a deletable or re-recordable Read-Only Memory (ROM), to a memory such as Random Access Memory (RAM), a memory chip, a memory device, or an integrated circuit, or to a storage medium that is optically or magnetically recordable and readable by a machine (e.g. a computer), such as a Compact Disc (CD), a Digital Versatile Disc (DVD), a magnetic disk, or a magnetic tape. The memory included in the mobile device or the head unit device is an example of a machine-readable storage medium suitable for storing a program or programs including instructions to implement the embodiments of the present invention. Accordingly, an embodiment of the present invention includes a program including a code for implementing the method as appended in the claims and a machine-readable storage medium that stores the program. The program may be transferred electronically through any medium such as a communication signal transmitted through a wired or wireless connection and embodiments of the present invention may include equivalents thereof.

In addition, an electronic device according to embodiments of the present invention may receive and store a program from a program providing device wirelessly or wiredly connected to the electronic device. The program providing device may include a memory for storing instructions to perform a method for providing glance information and information needed for the method, a communication module for communicating with the electronic device wirelessly or by cable, and a host controller for transmitting a corresponding program to the electronic device upon request or automatically.

At least one embodiment of the present invention sorts and arranges information related to an application to allow users to easily execute a necessary function of the application.

Moreover, at least one embodiment of the present invention provides a user-friendly information providing method that lets users know of information or an icon related to a screen that is not visible in an electronic device, in consideration of an actual environment of the electronic device.

Other effects that may be obtained or expected from the embodiment of the present invention are explicitly or implicitly described in the detailed description of embodiments of the present invention. Various effects expected from the embodiment of the present invention have been described in the detailed description of embodiments of the present invention.

While the present invention has been particularly shown and described with reference to certain embodiments thereof, various changes in form and detail may be made therein without departing from the scope of the present disclosure as defined by the following claims and their equivalents.

## Claims

1. A method for modifying a screen displayed by a mobile terminal, the method comprising:
displaying an application on the screen of the mobile terminal;
displaying, simultaneously with the displayed application, a card in a predefined area of the screen, the card comprising information corresponding to the application;
detecting an input on the screen of the mobile terminal;
modifying a display of at least one of the card and the predefined area based on a type of the input and a position of the input on the screen,
wherein, when the detected input is an input selecting one of a plurality of objects displayed within the card each corresponding to a different operation, modifying the display comprises performing the operation corresponding to the selected object.

2. The method of claim 1, wherein the predefined area comprises a handler key, detecting the input comprises detecting an input on the handler key, and modifying the display comprises removing the predefined area from the screen.

3. The method of claim 2, further comprising:
displaying the handler key without the predefined area;
detecting an input on the handler key; and
displaying the card in the predefined area with the display of the application.

4. The method of any one of claims 1 to 3, wherein detecting the input comprises detecting an input at a side of the displayed application, and modifying the display comprises removing the predefined area from the screen and displaying a bezel along the side of the display.

5. The method of any one of claims 1 to 4, wherein detecting the input comprises detecting an input at a top of the display of the application, and modifying the display comprises removing the predefined area from the screen and displaying a notification panel across the top of the display of the application.

6. The method of any one of claims 1 to 5, wherein the predefined area extends across a lowest portion of the screen of the mobile terminal, and the card comprise a plurality of cards disposed side-by-side across a length of the predefined area.

7. The method of claim 6, wherein detecting the input comprises detecting an input on two of the plurality of cards, and modifying the display comprises stacking two or more of the plurality of cards in a same category.

8. The method of claim 7, further comprising:
detecting an input on the stacked two or more of the plurality of cards; and
displaying the two or more of the plurality of cards in a vertical manner.

9. The method of any one of claims 1 to 8, wherein detecting the input comprises detecting an input on the card, and modifying the display comprises removing the predefined area from the screen and executing the application in accordance with the information of the card.

10. The method of any one of claims 1 to 9, wherein detecting the input comprises detecting an input on the card, and modifying the display comprises displaying a new application corresponding to the card.

11. The method of claim 10, further comprising displaying the card in the predetermined area when information corresponding to the new application exists.

12. The method of any one of claims 1 to 11, wherein detecting the input comprises detecting an input on a card, and modifying the display comprises displaying a notification inquiring whether all cards of a category of the card should be discarded.

13. The method of any one of claims 1 to 12, wherein detecting the input comprises detecting an input on the card, and modifying the display comprises expanding the card upwardly to display additional information of the card.

14. A machine-readable storage medium having recorded thereon a program for executing the method according to any one of claims 1 to 13.

15. An apparatus comprising the machine-readable storage medium of claim 14.
